(19) Europäisches Patentamt
European Patent Office
Office européen des brevets

(11) **EP 4 694 376 A1**

(12) **EUROPEAN PATENT APPLICATION**
published in accordance with Art. 153(4) EPC

(43) Date of publication:
**11.02.2026 Bulletin 2026/07**

(51) International Patent Classification (IPC):
*H04W 52/02* (2009.01)          *H04W 24/08* (2009.01)
*H04B 7/06* (2006.01)           *H04W 72/1268* (2023.01)
*H04W 72/232* (2023.01)         *H04W 74/0833* (2024.01)
*H04L 5/00* (2006.01)           *H04W 72/23* (2023.01)

(21) Application number: 24785373.2

(22) Date of filing: 08.04.2024

(52) Cooperative Patent Classification (CPC):
**H04B 7/06; H04L 5/00; H04W 24/08; H04W 52/02;
H04W 72/1268; H04W 72/23; H04W 72/232;
H04W 74/0833**

(86) International application number:
**PCT/KR2024/004647**

(87) International publication number:
**WO 2024/210681 (10.10.2024 Gazette 2024/41)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 06.04.2023 KR 20230045677
12.05.2023 KR 20230062025

(71) Applicant: LG Electronics Inc.
Yeongdeungpo-gu
Seoul 07336 (KR)

(72) Inventors:
• LEE, Youngdae
  Seoul 06772 (KR)
• KIM, Seonwook
  Seoul 06772 (KR)
• YANG, Suckchel
  Seoul 06772 (KR)
• MYUNG, Sechang
  Seoul 06772 (KR)

(74) Representative: Jung, Minkyu
Wuesthoff & Wuesthoff
Patentanwälte und Rechtsanwalt PartG mbB
Schweigerstraße 2
81541 München (DE)

(54) **METHOD AND APPARATUS FOR BEAM FAILURE DETECTION IN WIRELESS COMMUNICATION SYSTEM**

(57)     Disclosed are a method and an apparatus for beam failure detection in a wireless communication system. The method performed by a UE in a wireless communication system, according to an embodiment of the present disclosure, may comprise the steps of: receiving first configuration information and second configuration information from a base station, the first configuration information including information related to cell DTX and the second configuration information including information regarding a BFD RS set; evaluating a wireless link quality for the BFD RS set; and on the basis that a beam failure for the BFD RS set is detected only in an active time duration of the cell DTX, performing an uplink transmission for a BFR to the base station.

FIG.11

Receive first configuration information including information related to cell DTX and second configuration information including information for a BFD RS set —S1101

Assess radio link quality for a BFD RS set —S1102

Based on a detection of a beam failure, uplink transmission for BFR only during a time period when cell DTX is not applied —S1103

EP 4 694 376 A1

**Description**

[Technical Field]

The present disclosure relates to a wireless communication system, and in more detail, relates to a method and an apparatus for beam failure detection in a wireless communication system.

[Background Art]

A mobile communication system has been developed to provide a voice service while guaranteeing mobility of users. However, a mobile communication system has extended even to a data service as well as a voice service, and currently, an explosive traffic increase has caused shortage of resources and users have demanded a faster service, so a more advanced mobile communication system has been required.

The requirements of a next-generation mobile communication system at large should be able to support accommodation of explosive data traffic, a remarkable increase in a transmission rate per user, accommodation of the significantly increased number of connected devices, very low End-to-End latency and high energy efficiency. To this end, a variety of technologies such as Dual Connectivity, Massive Multiple Input Multiple Output (Massive MIMO), In-band Full Duplex, Non-Orthogonal Multiple Access (NOMA), Super wideband Support, Device Networking, etc. have been researched.

[Disclosure]

[Technical Problem]

A technical object of the present disclosure is to provide a method and an apparatus for beam failure detection in a wireless communication system.

In addition, an additional technical object of the present disclosure is to provide a method and an apparatus for beam failure detection in a wireless communication system to which network energy saving (NES) (i.e., cell discontinuous transmission (DTX) and/or discontinuous reception (DRX)) is applied.

In addition, an additional technical object of the present disclosure is to provide a method and an apparatus for beam failure recovery following beam failure in a wireless communication system to which NES (i.e., cell DTX and/or cell DRX) is applied.

The technical objects to be achieved by the present disclosure are not limited to the above-described technical objects, and other technical objects which are not described herein will be clearly understood by those skilled in the pertinent art from the following description.

[Technical Solution]

A method performed by a user equipment (UE) in a wireless communication system according to an aspect of the present disclosure may include: receiving first configuration information and second configuration information from a base station, wherein the first configuration information includes information related to cell discontinuous transmission (DTX), and the second configuration information includes information for a beam failure detection (BFD) reference signal (RS) set; assessing radio link quality for the BFD RS set; and performing uplink transmission for beam failure recovery (BFR) to the base station only during an active period of the cell DTX, based on a detection of a beam failure for the BFD RS set.

A method performed by a base station in a wireless communication system according to an additional aspect of the present disclosure may include: transmitting first configuration information and second configuration information from a base station, wherein the first configuration information includes information related to cell discontinuous transmission (DTX), and the second configuration information includes information for a beam failure detection (BFD) reference signal (RS) set; and receiving an uplink transmission for beam failure recovery (BFR) from the UE based on detection of a beam failure for the BFD RS set based on an assessment of radio link quality for the BFD RS set by the UE only during an active period of the cell DTX.

[Technical Effects]

According to an embodiment of the present disclosure, a UE can more accurately detect beam failure by considering NES operation (i.e., cell DTX and/or cell DRX).

In addition, according to an embodiment of the present disclosure, when some beam resources (e.g., some reference signals, some antenna ports, some antenna elements, etc.) are deactivated according to NES operation (i.e.,

cell DTX and/or cell DRX), an operation of the UE declaring unnecessary beam failure can be prevented.

Effects achievable by the present disclosure are not limited to the above-described effects, and other effects which are not described herein may be clearly understood by those skilled in the pertinent art from the following description.

[Brief Description of the Drawings]

Accompanying drawings included as part of detailed description for understanding the present disclosure provide embodiments of the present disclosure and describe technical features of the present disclosure with detailed description.

FIG. 1 illustrates a structure of a wireless communication system to which the present disclosure may be applied.

FIG. 2 illustrates a frame structure in a wireless communication system to which the present disclosure may be applied.

FIG. 3 illustrates a resource grid in a wireless communication system to which the present disclosure may be applied.

FIG. 4 illustrates a physical resource block in a wireless communication system to which the present disclosure may be applied.

FIG. 5 illustrates a slot structure in a wireless communication system to which the present disclosure may be applied.

FIG. 6 illustrates physical channels used in a wireless communication system to which the present disclosure may be applied and a general signal transmission and reception method using them.

FIG. 7 illustrates a beam failure recovery operation for a P-cell in a wireless communication system to which the present disclosure can be applied.

FIG. 8 illustrates the configuration of a CSI-RS resource set in a wireless communication system to which the present disclosure can be applied.

FIG. 9 illustrates a BFD RS configuration method according to an embodiment of the present disclosure.

FIG. 10 illustrates a signaling method for a beam failure detection method according to an embodiment of the present disclosure.

FIG. 11 illustrates an operation of a UE for a beam failure detection method according to an embodiment of the present disclosure.

FIG. 12 illustrates an operation of a base station for a beam failure detection method according to an embodiment of the present disclosure.

FIG. 13 illustrates a block diagram of a wireless communication device according to an embodiment of the present disclosure.

[Detailed Description]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

The present disclosure describes a wireless communication network or a wireless communication system, and an operation performed in a wireless communication network may be performed in a process in which a device (e.g., a base station) controlling a corresponding wireless communication network controls a network and transmits or receives a signal, or may be performed in a process in which a terminal associated to a corresponding wireless network transmits or receives a signal with a network or between terminals.

In the present disclosure, transmitting or receiving a channel includes a meaning of transmitting or receiving information or a signal through a corresponding channel. For example, transmitting a control channel means that control information or a control signal is transmitted through a control channel. Similarly, transmitting a data channel means that data information or a data signal is transmitted through a data channel.

Hereinafter, a downlink (DL) means a communication from a base station to a terminal and an uplink (UL) means a communication from a terminal to a base station. In a downlink, a transmitter may be part of a base station and a receiver may be part of a terminal. In an uplink, a transmitter may be part of a terminal and a receiver may be part of a base station. A base station may be expressed as a first communication device and a terminal may be expressed as a second communication device. A base station (BS) may be substituted with a term such as a fixed station, a Node B, an eNB(evolved-NodeB), a gNB(Next Generation NodeB), a BTS(base transceiver system), an Access Point(AP), a Network(5G network), an AI(Artificial Intelligence) system/module, an RSU(road side unit), a robot, a drone(UAV: Unmanned Aerial Vehicle), an AR(Augmented Reality) device, a VR(Virtual Reality) device, etc. In addition, a terminal may be fixed or mobile, and may be substituted with a term such as a UE(User Equipment), an MS(Mobile Station), a UT(user terminal), an MSS(Mobile Subscriber Station), an SS(Subscriber Station), an AMS(Advanced Mobile Station), a WT(Wireless terminal), an MTC(Machine-Type Communication) device, an M2M(Machine-to-Machine) device, a D2D(Device-to-Device) device, a vehicle, an RSU(road side unit), a robot, an AI(Artificial Intelligence) module, a drone(UAV: Unmanned Aerial Vehicle), an AR(Augmented Reality) device, a VR(Virtual Reality) device, etc.

The following description may be used for a variety of radio access systems such as CDMA, FDMA, TDMA, OFDMA, SC-FDMA, etc. CDMA may be implemented by a wireless technology such as UTRA(Universal Terrestrial Radio Access) or CDMA2000. TDMA may be implemented by a radio technology such as GSM(Global System for Mobile communications)/GPRS(General Packet Radio Service)/EDGE(Enhanced Data Rates for GSM Evolution). OFDMA may be implemented by a radio technology such as IEEE 802.11(Wi-Fi), IEEE 802.16(WiMAX), IEEE 802-20, E-UTRA(Evolved UTRA), etc. UTRA is a part of a UMTS(Universal Mobile Telecommunications System). 3GPP(3rd Generation Partnership Project) LTE(Long Term Evolution) is a part of an E-UMTS(Evolved UMTS) using E-UTRA and LTE-A(Advanced)/LTE-A pro is an advanced version of 3GPP LTE. 3GPP NR(New Radio or New Radio Access Technology) is an advanced version of 3GPP LTE/LTE-A/LTE-A pro.

To clarify description, it is described based on a 3GPP communication system (e.g., LTE-A, NR), but a technical idea of the present disclosure is not limited thereto. LTE means a technology after 3GPP TS(Technical Specification) 36.xxx Release 8. In detail, an LTE technology in or after 3GPP TS 36.xxx Release 10 is referred to as LTE-A and an LTE technology in or after 3GPP TS 36.xxx Release 13 is referred to as LTE-A pro. 3GPP NR means a technology in or after TS 38.xxx Release 15. LTE/NR may be referred to as a 3GPP system. "xxx" means a detailed number for a standard document. LTE/NR may be commonly referred to as a 3GPP system. For a background art, a term, an abbreviation, etc. used to describe the present disclosure, matters described in a standard document disclosed before the present disclosure may be referred to. For example, the following document may be referred to.

For 3GPP LTE, TS 36.211(physical channels and modulation), TS 36.212(multiplexing and channel coding), TS 36.213(physical layer procedures), TS 36.300(overall description), TS 36.331(radio resource control) may be referred to.

For 3GPP NR, TS 38.211(physical channels and modulation), TS 38.212(multiplexing and channel coding), TS 38.213(physical layer procedures for control), TS 38.214(physical layer procedures for data), TS 38.300(NR and NG-RAN(New Generation-Radio Access Network) overall description), TS 38.331(radio resource control protocol specification) may be referred to.

Abbreviations of terms which may be used in the present disclosure is defined as follows.

- BM: beam management
- CQI: Channel Quality Indicator
- CRI: channel state information - reference signal resource indicator
- CSI: channel state information
- CSI-IM: channel state information - interference measurement
- CSI-RS: channel state information - reference signal
- DMRS: demodulation reference signal
- FDM: frequency division multiplexing
- FFT: fast Fourier transform
- IFDMA: interleaved frequency division multiple access

- IFFT: inverse fast Fourier transform
- L1-RSRP: Layer 1 reference signal received power
- L1-RSRQ: Layer 1 reference signal received quality
- MAC: medium access control
- NZP: non-zero power
- OFDM: orthogonal frequency division multiplexing
- PDCCH: physical downlink control channel
- PDSCH: physical downlink shared channel
- PMI: precoding matrix indicator
- RE: resource element
- RI: Rank indicator
- RRC: radio resource control
- RSSI: received signal strength indicator
- Rx: Reception
- QCL: quasi co-location
- SINR: signal to interference and noise ratio
- SSB (or SS/PBCH block): Synchronization signal block (including PSS (primary synchronization signal), SSS (secondary synchronization signal) and PBCH (physical broadcast channel))
- TDM: time division multiplexing
- TRP: transmission and reception point
- TRS: tracking reference signal
- Tx: transmission
- UE: user equipment
- ZP: zero power

Overall System

As more communication devices have required a higher capacity, a need for an improved mobile broadband communication compared to the existing radio access technology (RAT) has emerged. In addition, massive MTC (Machine Type Communications) providing a variety of services anytime and anywhere by connecting a plurality of devices and things is also one of main issues which will be considered in a next-generation communication. Furthermore, a communication system design considering a service/a terminal sensitive to reliability and latency is also discussed. As such, introduction of a next-generation RAT considering eMBB(enhanced mobile broadband communication), mMTC(massive MTC), URLLC(Ultra-Reliable and Low Latency Communication), etc. is discussed and, for convenience, a corresponding technology is referred to as NR in the present disclosure. NR is an expression which represents an example of a 5G RAT.

A new RAT system including NR uses an OFDM transmission method or a transmission method similar to it. A new RAT system may follow OFDM parameters different from OFDM parameters of LTE. Alternatively, a new RAT system follows a numerology of the existing LTE/LTE-A as it is, but may support a wider system bandwidth (e.g., 100MHz). Alternatively, one cell may support a plurality of numerologies. In other words, terminals which operate in accordance with different numerologies may coexist in one cell.

A numerology corresponds to one subcarrier spacing in a frequency domain. As a reference subcarrier spacing is scaled by an integer N, a different numerology may be defined.

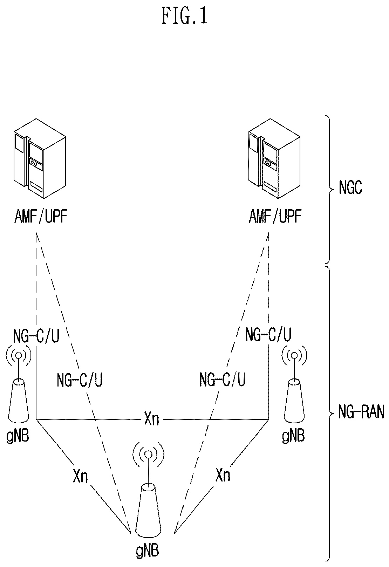

FIG. 1 illustrates a structure of a wireless communication system to which the present disclosure may be applied.

In reference to FIG. 1, NG-RAN is configured with gNBs which provide a control plane (RRC) protocol end for a NG-RA(NG-Radio Access) user plane (i.e., a new AS(access stratum) sublayer/PDCP(Packet Data Convergence Protocol)/RLC(Radio Link Control)/MAC/PHY) and UE. The gNBs are interconnected through a Xn interface. The gNB, in addition, is connected to an NGC(New Generation Core) through an NG interface. In more detail, the gNB is connected to an AMF(Access and Mobility Management Function) through an N2 interface, and is connected to a UPF(User Plane Function) through an N3 interface.

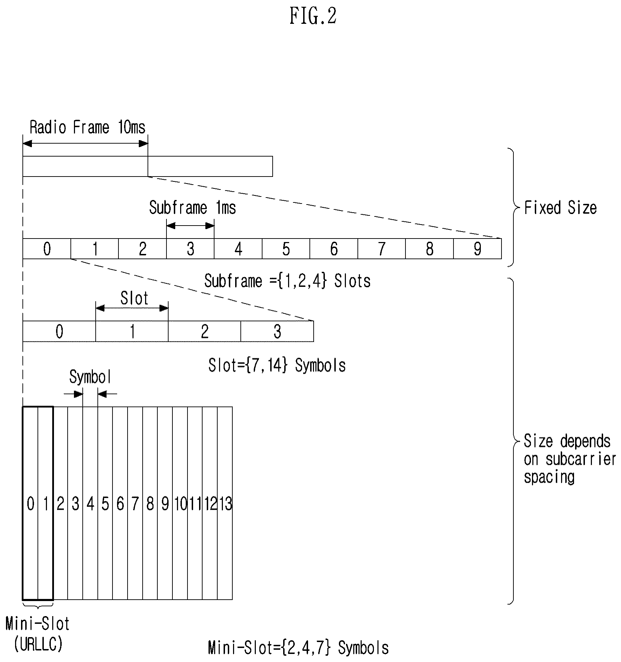

FIG. 2 illustrates a frame structure in a wireless communication system to which the present disclosure may be applied.

A NR system may support a plurality of numerologies. Here, a numerology may be defined by a subcarrier spacing and a cyclic prefix (CP) overhead. Here, a plurality of subcarrier spacings may be derived by scaling a basic (reference) subcarrier spacing by an integer N (or, μ). In addition, although it is assumed that a very low subcarrier spacing is not used in a very high carrier frequency, a used numerology may be selected independently from a frequency band. In addition, a variety of frame structures according to a plurality of numerologies may be supported in a NR system.

Hereinafter, an OFDM numerology and frame structure which may be considered in a NR system will be described. A plurality of OFDM numerologies supported in a NR system may be defined as in the following Table 1.

[Table 1]

| $\mu$ | $\Delta f = 2^\mu \cdot 15$ [kHz] | CP |
|---|---|---|
| 0 | 15 | Normal |
| 1 | 30 | Normal |
| 2 | 60 | Normal, Extended |
| 3 | 120 | Normal |
| 4 | 240 | Normal |

NR supports a plurality of numerologies (or subcarrier spacings (SCS)) for supporting a variety of 5G services. For example, when a SCS is 15kHz, a wide area in traditional cellular bands is supported, and when a SCS is 30kHz/60kHz, dense-urban, lower latency and a wider carrier bandwidth are supported, and when a SCS is 60kHz or higher, a bandwidth wider than 24.25GHz is supported to overcome a phase noise.

An NR frequency band is defined as a frequency range in two types (FR1, FR2). FR1, FR2 may be configured as in the following Table 2. In addition, FR2 may mean a millimeter wave (mmW).

[Table 2]

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Regarding a frame structure in an NR system, a size of a variety of fields in a time domain is expresses as a multiple of a time unit of $T_c = 1/(\Delta f_{max} \cdot N_f)$. Here, $\Delta f_{max}$ is $480 \cdot 103$ Hz and $N_f$ is 4096. Downlink and uplink transmission is configured (organized) with a radio frame having a duration of $T_f = 1/(\Delta f_{max} N_f/100) \cdot T_c = 10$ms. Here, a radio frame is configured with 10 subframes having a duration of $T_{sf} = (\Delta f_{max} N_f/1000) \cdot T_c = 1$ms, respectively. In this case, there may be one set of frames for an uplink and one set of frames for a downlink. In addition, transmission in an uplink frame No. i from a terminal should start earlier by $T_{TA} = (N_{TA} + N_{TA,offset}) T_c$ than a corresponding downlink frame in a corresponding terminal starts. For a subcarrier spacing configuration $\mu$, slots are numbered in an increasing order of $n_s^\mu \in \{0,..., N_{slot}^{subframe,\mu}-1\}$ in a subframe and are numbered in an increasing order of $n_{s,f}^\mu \in \{0,..., N_{slot}^{frame,\mu}-1\}$ in a radio frame. One slot is configured with $N_{symb}^{slot}$ consecutive OFDM symbols and $N_{symb}^{slot}$ is determined according to CP. A start of a slot $n_s^\mu$ in a subframe is temporally arranged with a start of an OFDM symbol $n_s^\mu N_{symb}^{slot}$ in the same subframe. All terminals may not perform transmission and reception at the same time, which means that all OFDM symbols of a downlink slot or an uplink slot may not be used.

Table 3 represents the number of OFDM symbols per slot ($N_{symb}^{slot}$), the number of slots per radio frame ($N_{slot}^{frame,\mu}$) and the number of slots per subframe ($N_{slot}^{subframe,\mu}$) in a normal CP and Table 4 represents the number of OFDM symbols per slot, the number of slots per radio frame and the number of slots per subframe in an extended CP.

[Table 3]

| $\mu$ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

[Table 4]

| μ | $N_{symb}^{slot}$ | $N_{slot}^{frame,\mu}$ | $N_{slot}^{subframe,\mu}$ |
|---|---|---|---|
| 2 | 12 | 40 | 4 |

FIG. 2 is an example on μ=2 (SCS is 60kHz), 1 subframe may include 4 slots referring to Table 3. 1 subframe= {1,2,4} slot shown in FIG. 2 is an example, the number of slots which may be included in 1 subframe is defined as in Table 3 or Table 4. In addition, a mini-slot may include 2, 4 or 7 symbols or more or less symbols.

Regarding a physical resource in a NR system, an antenna port, a resource grid, a resource element, a resource block, a carrier part, etc. may be considered. Hereinafter, the physical resources which may be considered in an NR system will be described in detail.

First, in relation to an antenna port, an antenna port is defined so that a channel where a symbol in an antenna port is carried can be inferred from a channel where other symbol in the same antenna port is carried. When a large-scale property of a channel where a symbol in one antenna port is carried may be inferred from a channel where a symbol in other antenna port is carried, it may be said that 2 antenna ports are in a QC/QCL(quasi co-located or quasi co-location) relationship. In this case, the large-scale property includes at least one of delay spread, doppler spread, frequency shift, average received power, received timing.

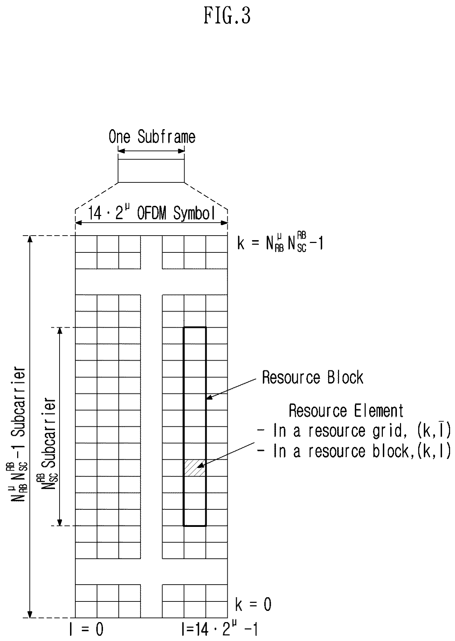

FIG. 3 illustrates a resource grid in a wireless communication system to which the present disclosure may be applied.

In reference to FIG. 3, it is illustratively described that a resource grid is configured with $N_{RB}^{\mu}N_{sc}^{RB}$ subcarriers in a frequency domain and one subframe is configured with $14 \cdot 2^{\mu}$ OFDM symbols, but it is not limited thereto. In an NR system, a transmitted signal is described by OFDM symbols of $2^{\mu}N_{symb}^{(\mu)}$ and one or more resource grids configured with $N_{RB}^{\mu}N_{sc}^{RB}$ subcarriers. Here, $N_{RB}^{\mu} \leq N_{RB}^{max,\mu}$. The $N_{RB}^{max,\mu}$ represents a maximum transmission bandwidth, which may be different between an uplink and a downlink as well as between numerologies. In this case, one resource grid may be configured per μ and antenna port p. Each element of a resource grid for μ and an antenna port p is referred to as a resource element and is uniquely identified by an index pair (k,l'). Here, k=0,..., $N_{RB}^{\mu}N_{sc}^{RB}$-1 is an index in a frequency domain and 1'=0,..., $2^{\mu}N_{symb}^{(\mu)}$-1 refers to a position of a symbol in a subframe. When referring to a resource element in a slot, an index pair (k,l) is used. Here, l=0,..., $N_{symb}^{\mu}$-1. A resource element (k,l') for μ and an antenna port p corresponds to a complex value, $a_{k,l'}^{(p,\mu)}$. When there is no risk of confusion or when a specific antenna port or numerology is not specified, indexes p and μ may be dropped, whereupon a complex value may be $a_{k,l'}^{(p)}$ or $a_{k,l'}$. In addition, a resource block (RB) is defined as $N_{sc}^{RB}$=12 consecutive subcarriers in a frequency domain.

Point A plays a role as a common reference point of a resource block grid and is obtained as follows.

-    offsetToPointA for a primary cell (PCell) downlink represents a frequency offset between point A and the lowest subcarrier of the lowest resource block overlapped with a SS/PBCH block which is used by a terminal for an initial cell selection. It is expressed in resource block units assuming a 15kHz subcarrier spacing for FR1 and a 60kHz subcarrier spacing for FR2.
-    absoluteFrequencyPointA represents a frequency-position of point A expressed as in ARFCN (absolute radio-frequency channel number).

Common resource blocks are numbered from 0 to the top in a frequency domain for a subcarrier spacing configuration μ. The center of subcarrier 0 of common resource block 0 for a subcarrier spacing configuration μ is identical to 'point A'. A relationship between a common resource block number $n_{CRB}^{\mu}$ and a resource element (k,l) for a subcarrier spacing configuration μ in a frequency domain is given as in the following Equation 1.

【Equation 1】

$$n_{CRB}^{\mu} = \left\lfloor \frac{k}{N_{sc}^{RB}} \right\rfloor$$

In Equation 1, k is defined relatively to point A so that k=0 corresponds to a subcarrier centering in point A. Physical resource blocks are numbered from 0 to $N_{BWP,i}^{size,\mu}$-1 in a bandwidth part (BWP) and i is a number of a BWP. A relationship between a physical resource block $n_{PRB}$ and a common resource block $n_{CRB}$ in BWP i is given by the following Equation 2.

【Equation 2】

$$n_{CRB}^{\mu} = n_{PRB}^{\mu} + N_{BWP,i}^{start,\mu}$$

$N_{BWP,i}^{start,\mu}$ is a common resource block that a BWP starts relatively to common resource block 0.

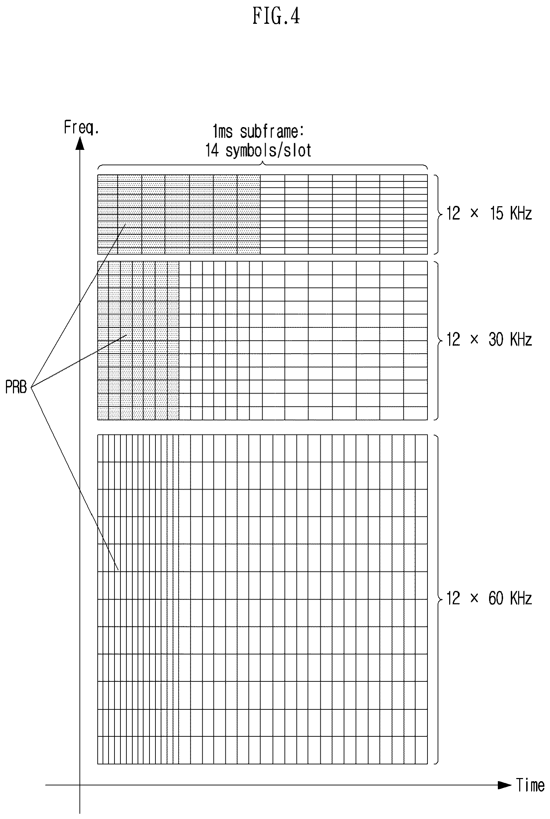

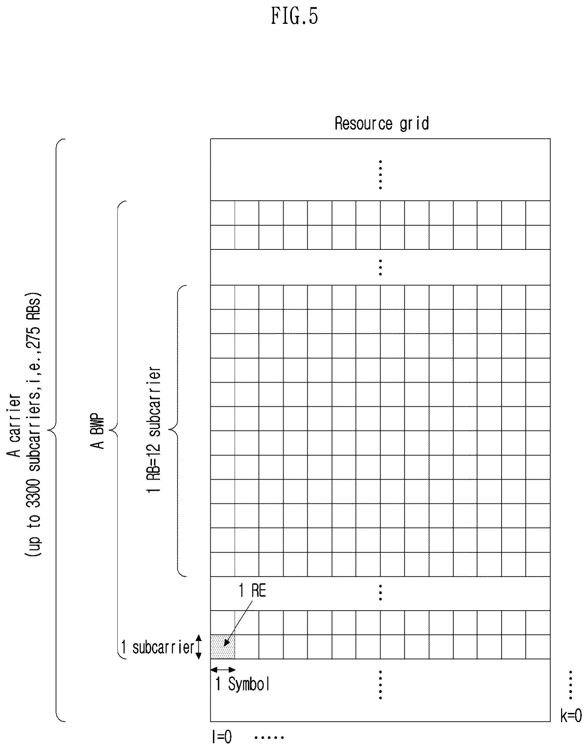

FIG. 4 illustrates a physical resource block in a wireless communication system to which the present disclosure may be applied. And, FIG. 5 illustrates a slot structure in a wireless communication system to which the present disclosure may be applied.

In reference to FIG. 4 and FIG. 5, a slot includes a plurality of symbols in a time domain. For example, for a normal CP, one slot includes 7 symbols, but for an extended CP, one slot includes 6 symbols.

A carrier includes a plurality of subcarriers in a frequency domain. An RB (Resource Block) is defined as a plurality of (e.g., 12) consecutive subcarriers in a frequency domain. A BWP(Bandwidth Part) is defined as a plurality of consecutive (physical) resource blocks in a frequency domain and may correspond to one numerology (e.g., an SCS, a CP length, etc.). A carrier may include a maximum N (e.g., 5) BWPs. A data communication may be performed through an activated BWP and only one BWP may be activated for one terminal. In a resource grid, each element is referred to as a resource element (RE) and one complex symbol may be mapped.

In an NR system, up to 400 MHz may be supported per component carrier (CC). If a terminal operating in such a wideband CC always operates turning on a radio frequency (FR) chip for the whole CC, terminal battery consumption may increase. Alternatively, when several application cases operating in one wideband CC (e.g., eMBB, URLLC, Mmtc, V2X, etc.) are considered, a different numerology (e.g., a subcarrier spacing, etc.) may be supported per frequency band in a corresponding CC. Alternatively, each terminal may have a different capability for the maximum bandwidth. By considering it, a base station may indicate a terminal to operate only in a partial bandwidth, not in a full bandwidth of a wideband CC, and a corresponding partial bandwidth is defined as a bandwidth part (BWP) for convenience. A BWP may be configured with consecutive RBs on a frequency axis and may correspond to one numerology (e.g., a subcarrier spacing, a CP length, a slot/a mini-slot duration).

Meanwhile, a base station may configure a plurality of BWPs even in one CC configured to a terminal. For example, a BWP occupying a relatively small frequency domain may be configured in a PDCCH monitoring slot, and a PDSCH indicated by a PDCCH may be scheduled in a greater BWP. Alternatively, when UEs are congested in a specific BWP, some terminals may be configured with other BWP for load balancing. Alternatively, considering frequency domain inter-cell interference cancellation between neighboring cells, etc., some middle spectrums of a full bandwidth may be excluded and BWPs on both edges may be configured in the same slot. In other words, a base station may configure at least one DL/UL BWP to a terminal associated with a wideband CC. A base station may activate at least one DL/UL BWP of configured DL/UL BWP(s) at a specific time (by L1 signaling or MAC CE(Control Element) or RRC signaling, etc.). In addition, a base station may indicate switching to other configured DL/UL BWP (by L1 signaling or MAC CE or RRC signaling, etc.). Alternatively, based on a timer, when a timer value is expired, it may be switched to a determined DL/UL BWP. Here, an activated DL/UL BWP is defined as an active DL/UL BWP. But, a configuration on a DL/UL BWP may not be received when a terminal performs an initial access procedure or before a RRC connection is set up, so a DL/UL BWP which is assumed by a terminal under these situations is defined as an initial active DL/UL BWP.

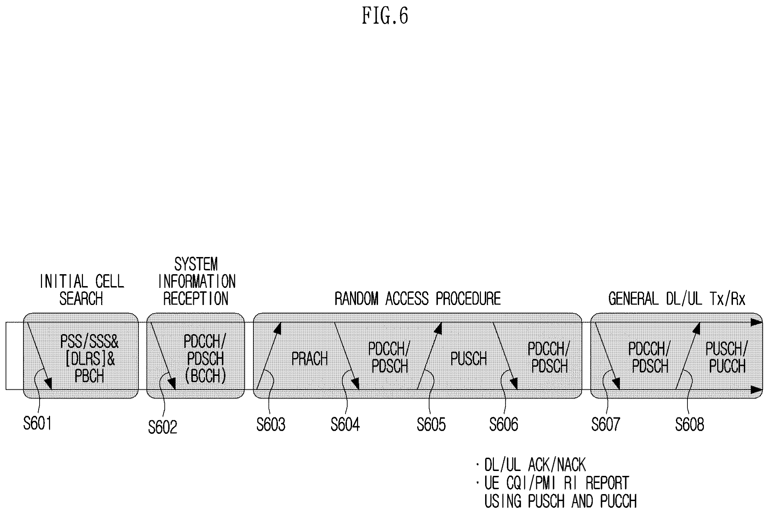

FIG. 6 illustrates physical channels used in a wireless communication system to which the present disclosure may be applied and a general signal transmission and reception method using them.

In a wireless communication system, a terminal receives information through a downlink from a base station and transmits information through an uplink to a base station. Information transmitted and received by a base station and a terminal includes data and a variety of control information and a variety of physical channels exist according to a type/a usage of information transmitted and received by them.

When a terminal is turned on or newly enters a cell, it performs an initial cell search including synchronization with a base station or the like (S601). For the initial cell search, a terminal may synchronize with a base station by receiving a primary synchronization signal (PSS) and a secondary synchronization signal (SSS) from a base station and obtain information such as a cell identifier (ID), etc. After that, a terminal may obtain broadcasting information in a cell by receiving a physical broadcast channel (PBCH) from a base station. Meanwhile, a terminal may check out a downlink channel state by receiving a downlink reference signal (DL RS) at an initial cell search stage.

A terminal which completed an initial cell search may obtain more detailed system information by receiving a physical downlink control channel (PDCCH) and a physical downlink shared channel (PDSCH) according to information carried in the PDCCH (S602).

Meanwhile, when a terminal accesses to a base station for the first time or does not have a radio resource for signal transmission, it may perform a random access (RACH) procedure to a base station (S603 to S606). For the random access procedure, a terminal may transmit a specific sequence as a preamble through a physical random access channel (PRACH) (S603 and S605) and may receive a response message for a preamble through a PDCCH and a corresponding PDSCH (S604 and S606). A contention based RACH may additionally perform a contention resolution procedure.

A terminal which performed the above-described procedure subsequently may perform PDCCH/PDSCH reception (S607) and PUSCH(Physical Uplink Shared Channel)/PUCCH(physical uplink control channel) transmission (S608) as a general uplink/downlink signal transmission procedure. In particular, a terminal receives downlink control information (DCI) through a PDCCH. Here, DCI includes control information such as resource allocation information for a terminal and a format varies depending on its purpose of use.

Meanwhile, control information which is transmitted by a terminal to a base station through an uplink or is received by a terminal from a base station includes a downlink/uplink ACK/NACK(Acknowledgement/Non-Acknowledgement) signal, a CQI(Channel Quality Indicator), a PMI(Precoding Matrix Indicator), a RI(Rank Indicator), etc. For a 3GPP LTE system, a terminal may transmit control information of the above-described CQI/PMI/RI, etc. through a PUSCH and/or a PUCCH.

Table 5 represents an example of a DCI format in an NR system.

[Table 5]

| DCI Format | Use |
|---|---|
| 0_0 | Scheduling of a PUSCH in one cell |
| 0_1 | Scheduling of one or multiple PUSCHs in one cell, or indication of cell group downlink feedback information to a UE |
| 0_2 | Scheduling of a PUSCH in one cell |
| 1 0 | Scheduling of a PDSCH in one DL cell |
| 1_1 | Scheduling of a PDSCH in one cell |
| 1_2 | Scheduling of a PDSCH in one cell |

In reference to Table 5, DCI formats 0_0, 0_1 and 0_2 may include resource information (e.g., UL/SUL(Supplementary UL), frequency resource allocation, time resource allocation, frequency hopping, etc.), information related to a transport block(TB) (e.g., MCS(Modulation Coding and Scheme), a NDI(New Data Indicator), a RV(Redundancy Version), etc.), information related to a HARQ(Hybrid - Automatic Repeat and request) (e.g., a process number, a DAI(Downlink Assignment Index), PDSCH-HARQ feedback timing, etc.), information related to multiple antennas (e.g., DMRS sequence initialization information, an antenna port, a CSI request, etc.), power control information (e.g., PUSCH power control, etc.) related to scheduling of a PUSCH and control information included in each DCI format may be pre-defined.

DCI format 0_0 is used for scheduling of a PUSCH in one cell. Information included in DCI format 0_0 is CRC (cyclic redundancy check) scrambled by a C-RNTI(Cell Radio Network Temporary Identifier) or a CS-RNTI(Configured Scheduling RNTI) or a MCS-C-RNTI(Modulation Coding Scheme Cell RNTI) and transmitted.

DCI format 0_1 is used to indicate scheduling of one or more PUSCHs or configure grant (CG) downlink feedback information to a terminal in one cell. Information included in DCI format 0_1 is CRC scrambled by a C-RNTI or a CS-RNTI or a SP-CSI-RNTI(Semi-Persistent CSI RNTI) or a MCS-C-RNTI and transmitted.

DCI format 0_2 is used for scheduling of a PUSCH in one cell. Information included in DCI format 0_2 is CRC scrambled by a C-RNTI or a CS-RNTI or a SP-CSI-RNTI or a MCS-C-RNTI and transmitted.

Next, DCI formats 1_0, 1_1 and 1_2 may include resource information (e.g., frequency resource allocation, time resource allocation, VRB(virtual resource block)-PRB(physical resource block) mapping, etc.), information related to a transport block(TB)(e.g., MCS, NDI, RV, etc.), information related to a HARQ (e.g., a process number, DAI, PDSCH-HARQ feedback timing, etc.), information related to multiple antennas (e.g., an antenna port, a TCI(transmission configuration indicator), a SRS(sounding reference signal) request, etc.), information related to a PUCCH (e.g., PUCCH power control, a PUCCH resource indicator, etc.) related to scheduling of a PDSCH and control information included in each DCI format may be pre-defined.

DCI format 1_0 is used for scheduling of a PDSCH in one DL cell. Information included in DCI format 1_0 is CRC scrambled by a C-RNTI or a CS-RNTI or a MCS-C-RNTI and transmitted.

DCI format 1_1 is used for scheduling of a PDSCH in one cell. Information included in DCI format 1_1 is CRC scrambled by a C-RNTI or a CS-RNTI or a MCS-C-RNTI and transmitted.

DCI format 1_2 is used for scheduling of a PDSCH in one cell. Information included in DCI format 1_2 is CRC scrambled by a C-RNTI or a CS-RNTI or a MCS-C-RNTI and transmitted.

Quasi-co Locaton (QCL)

An antenna port is defined so that a channel where a symbol in an antenna port is transmitted can be inferred from a channel where other symbol in the same antenna port is transmitted. When a property of a channel where a symbol in one antenna port is carried may be inferred from a channel where a symbol in other antenna port is carried, it may be said that 2 antenna ports are in a QC/QCL(quasi co-located or quasi co-location) relationship.

Here, the channel property includes at least one of delay spread, doppler spread, frequency/doppler shift, average received power, received timing/average delay, or a spatial RX parameter. Here, a spatial Rx parameter means a spatial (Rx) channel property parameter such as an angle of arrival.

A terminal may be configured at list of up to M TCI-State configurations in a higher layer parameter PDSCH-Config to decode a PDSCH according to a detected PDCCH having intended DCI for a corresponding terminal and a given serving cell. The M depends on UE capability.

Each TCI-State includes a parameter for configuring a quasi co-location relationship between ports of one or two DL reference signals and a DM-RS of a PDSCH.

A quasi co-location relationship is configured by a higher layer parameter qc1-Type1 for a first DL RS and qcl-Type2 for a second DL RS (if configured). For two DL RSs, a QCL type is not the same regardless of whether a reference is a same DL RS or a different DL RS.

A quasi co-location type corresponding to each DL RS is given by a higher layer parameter qcl-Type of QCL-Info and may take one of the following values.

- 'QCL-TypeA': {Doppler shift, Doppler spread, average delay, delay spread}
- 'QCL-TypeB': {Doppler shift, Doppler spread}
- 'QCL-TypeC': {Doppler shift, average delay}
- 'QCL-TypeD': {Spatial Rx parameter}

For example, when a target antenna port is a specific NZP CSI-RS, it may be indicated/configured that a corresponding NZP CSI-RS antenna port(s) is quasi-colocated with a specific TRS with regard to QCL-Type A and is quasi-colocated with a specific SSB with regard to QCL-Type D. A terminal received such indication/configuration may receive a corresponding NZP CSI-RS by using a doppler, delay value measured in a QCL-TypeA TRS and apply a Rx beam used for receiving QCL-TypeD SSB to reception of a corresponding NZP CSI-RS.

UE may receive an activation command by MAC CE signaling used to map up to 8 TCI states to a codepoint of a DCI field 'Transmission Configuration Indication'.

Beam Failure Detection (BFD) and Beam Failure Recovery (BFR)

In performing a DL/UL beam management process, a beam mismatch problem may occur according to a configured beam management cycle. In particular, when a terminal moves or revolves or when a wireless channel environment is changed by the movement of a surrounding object (e.g., a beam is blocked to change a LoS (line-of sight) environment into a Non-LoS environment), the optimum DL/UL beam pair may be changed. Due to such a change, when tracking fails in a beam management process generally performed by a network indication, a beam failure event may be considered to occur. Whether such a beam failure event occurs may be determined by a terminal through reception quality of a downlink reference signal (RS). And, a reporting message for such a situation or a message for a beam recovery request (referred to as a BFRQ (beam failure recovery request) message) should be transmitted from a terminal. A base station which received such a beam failure recovery request message may perform beam recovery through a variety of processes such as beam RS transmission, beam reporting request, etc. for beam recovery. These series of beam recovery processes are referred to as beam failure recovery (BFR). A Rel-15 NR standardized a BFR (beam failure recovery) process for a primary cell (PCell) or a primary secondary cell (PScell) (the two are collectively referred to as a special cell (SpCell)) that a contention based PRACH resource always exists. As an operation in a serving cell, a corresponding BFR procedure is configured as follows with a beam failure detection (BFD) process of a terminal, a BFRQ process, and a process in which a terminal monitors a response of a base station to a BFRQ.

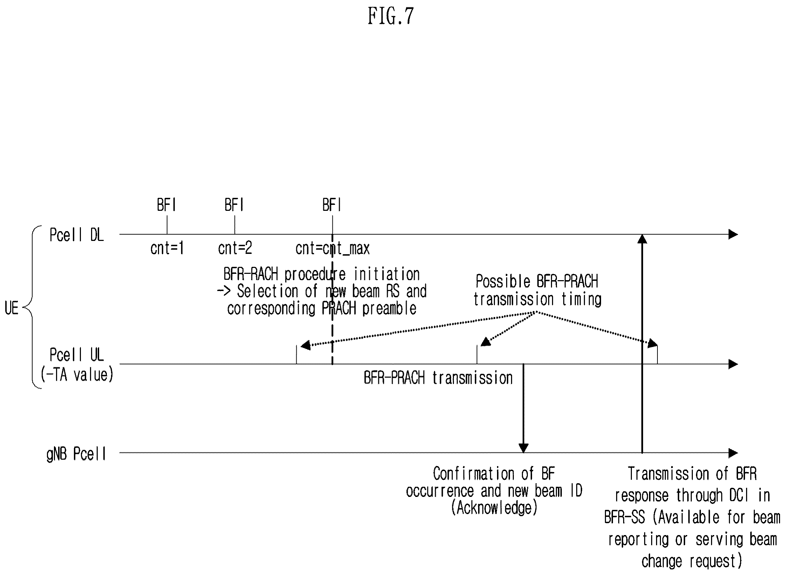

FIG. 7 is a diagram which illustrates a beam failure recovery operation for a Pcell in a wireless communication system to which the present disclosure may be applied.

Hereinafter, in reference to FIG. 7, a beam failure recovery operation is described.

1) BFD (Beam failure detection)

When all PDCCH beams fall below a predetermined quality value (Qout), it is said that one beam failure instance occurred. Here, quality is based on a hypothetical block error rate (BLER). In other words, it means a probability of a failure in demodulation of corresponding information when it is assumed that control information was transmitted to a corresponding PDCCH.

Here, one or a plurality of search spaces for monitoring a PDCCH may be configured to a terminal. Here, a beam may be differently configured per each search space. In this case, it means a case that all PDCCH beams for all search spaces fall below a BLER threshold. As a method for a terminal to determine a BFD RS, the following two methods are supported.

An implicit configuration for BFD RS(s): a CORESET (control resource set) ID (identifier), a resource region where a PDCCH may be transmitted, is configured in each search space. And, QCLed (Quasi Co-located) RS information for a spatial RX parameter (e.g., a CSI-RS resource ID, a SSB ID) may be indicated/configured per each CORESET ID. For example, a QCLed RS is indicated/configured by a TCI (transmit configuration information) indication in a NR standard. Here, a QCLed RS for a spatial RX parameter (e.g., QCL type D in TS38.214) means that a base station informs that a terminal equally uses (or may use) a beam used to receive a corresponding spatially QCLed RS (i.e., use the same spatial domain filter for reception) in receiving a corresponding PDCCH DMRS. Finally, from a viewpoint of a base station, it is a method of informing a terminal that transmission will be performed by applying the same transmission beam or a similar transmission beam (e.g., when a beam direction is same/similar, but a beam width is different) between spatially QCLed antenna ports. In other words, as described above, a terminal may determine (i.e., consider as the 'all PDCCH beams') as a BFD RS a QCLed (Quasi Co-located) RS for a spatial RX parameter configured to a CORESET for PDCCH reception.

An explicit configuration for BFD RS(s): a base station may explicitly configure beam RS(s) to a terminal for the purpose (beam failure detection). In this case, corresponding configured beam RS(s) correspond to the 'all PDCCH beams'.

Whenever an event occurs that a hypothetical BLER measured based on BFD RS(s) deteriorates over a specific threshold, a physical layer of a terminal informs a MAC sublayer that a beam failure instance (BFI) occurred. In a MAC sublayer of a terminal, when as many BFIs as the certain number of times (e.g., a value of a higher layer parameter, beamFailureInstanceMaxCount) occur within a certain time (i.e., within a BFD timer), a beam failure is determined (considered) to occur and a relevant RACH operation is initiated.

A MAC object operates as follows:

1> If a BFI is received from a lower layer (e.g., a physical layer):

2> Start or restart a BFD timer (beamFailureDetectionTimer);
2> Increase (increment) a BFI counter (BFI_COUNTER) by 1;
2> If a BFI counter (BFI_COUNTER) is equal to or greater than the maximum count (number of times) of BFIs (beamFailureInstanceMaxCount):

3> Initiate a Random Access procedure in a SpCell (refer to the above-described Random Access related procedure).

1> If a BFD timer (beamFailureDetectionTimer) is expired; or
1> If a BFD timer (beamFailureDetectionTimer), the maximum count (number of times) of BFIs (beamFailureInstanceMaxCount), or any reference signals used for beam failure detection is reconfigured by a higher layer (e.g., a RRC layer):

2> Set a BFI counter (BFI_COUNTER) as 0.

1> If a Random Access procedure is successfully completed:

2> Set a BFI counter (BFI_COUNTER) as 0;
2> If configured, stop a beam failure recovery timer (beamFailureRecoveryTimer);
2> Consider that a Beam Failure Recovery procedure was successfully completed

2) (PRACH based) Beam Failure Recovery Request (BFRQ): New Beam Identification + PRACH Transmission

As described in 1) Beam Failure Detection (BFD), when a certain number of BFIs or more occur, a terminal may determine that a beam failure occurred and perform a beam failure recovery operation. As an example of a Beam failure recovery operation, a beam failure recovery request (BFRQ) operation based on a RACH procedure (i.e., a PRACH) may be performed. Hereinafter, a corresponding BFRQ procedure is described in detail.

A base station may configure a RS list (e.g., candidateBeamRSList) corresponding to candidate beams which may be substituted when a beam failure (BF) occurs through higher layer signaling (e.g., RRC) for a corresponding terminal. In addition, dedicated PRACH resources may be configured for corresponding candidate beams. Here, dedicated PRACH resources are non-contention based PRACH (also referred to as contention free PRACH) resources. If a terminal does not find a (proper) beam in a corresponding list, a terminal selects a contention based PRACH among preconfigured SSB resources and transmits it to a base station. A specific procedure is as follows.

Step 1) A terminal finds a beam with more than a predetermined quality value (Qin) among RSs configured by a base station as a candidate beam RS set.

- If one beam RS exceeds a threshold, a terminal selects a corresponding beam RS.
- If a plurality of beam RSs exceeds a threshold, a terminal selects any one of corresponding beam RSs.
- If no beam exceeds a threshold, a terminal performs the following step 2.

Here, beam quality may be based on a RSRP.

In addition, a RS beam set configured by the base station may include the following three cases. For example, all beam RSs in a RS beam set may be configured with SSBs. Alternatively, all beam RSs in a RS beam set may be configured with CSI-RS resources. Alternatively, beam RSs in a RS beam set may be configured with SSBs and CSI-RS resources.

Step 2) A terminal finds a beam with more than a predetermined quality value (Qin) or more among SSBs (associated with a contention based PRACH resource).

- If one SSB exceeds a threshold, a terminal selects a corresponding beam RS.
- If a plurality of SSBs exceeds a threshold, a terminal selects any one of corresponding beam RSs.
- If no beam exceeds a threshold, a terminal performs the following step 3.

Step 3) A terminal selects any SSB among SSBs (associated with a contention based PRACH resource).

A terminal transmits to a base station a preamble and a PRACH resource which is directly or indirectly associated and configured with a beam RS (CSI-RS or SSB) selected in the process.

- Here, a direct association configuration is used in the following case.

When a contention-free PRACH resource and a preamble are configured for a specific RS in a candidate beam RS set which is separately configured for BFR

When a preamble and a (contention based) PRACH resource mapped one-to-one with SSBs which are commonly configured for other purposes such as random access, etc. are configured

- Alternatively, here, an indirect association configuration is used in the following case.

When a contention-free PRACH resource and a preamble are not configured for a specific CSI-RS in a candidate beam RS set which is separately configured for BFR

Here, a terminal selects a preamble and a (contention free) PRACH resource associated with a SSB (i.e., QCLed (quasi-co-located) with respect to a spatial Rx parameter) designated to be receivable with the same Rx beam as a corresponding CSI-RS.

3) Monitoring of a response of a base station to a BFRQ

- A terminal monitors a response of a base station (gNB) to corresponding PRACH transmission.

Here, a response to the contention-free PRACH resource and preamble is transmitted to a PDCCH masked by a C-RNTI and a response is received in a search space (SS) which is separately configured by RRC for BFR.

Here, the search space is configured for a specific CORESET (for BFR).

For a response to a Contention PRACH, a search space and a CORESET (e.g., CORESET 0 or CORESET 1) configured for a general contention PRACH based random access process are reused as they are.

- If there is no response for a certain period of time, 2) a process of identifying and selecting a new beam, and 3) a process of monitoring a response of a base station and a BFRQ are repeated.

The process may be performed until PRACH transmission reaches the preconfigured maximum number of times (N_max) or a configured timer (BFR timer) expires.

If the timer expires, a terminal stops contention free PRACH transmission, but may perform contention based PRACH transmission by a SSB selection until N_max is reached.

Improved Beam Failure Recovery (Rel-16)

As described above, Rel-15 NR standardized a PRACH based BFR process. However, it is applied only to a PCell or a PSCell due to a technical limit that any SCell may have no UL carrier in CA (carrier aggregation) and although there is a UL carrier, a contention based PRACH may not be configured. Such a limit has a limit that especially, when a SCell is operated in a high frequency band (e.g., 30GHz) while operating a PCell in a low frequency band (e.g., below 6GHz), BFR may not be supported in a high frequency band where BFR is actually needed. For this reason, standardization for BFR support on a SCell is performed in a Rel-16 NR MIMO work item. So far, as a result of a standardization discussion, UL transmission to a corresponding SCell is impossible at least for a DL only SCell, so it is planned to configure (dedicated) PUCCH resource(s), which are used for informing a base station that SCell beam failure occurred, in a SpCell and use it to perform a BFRQ for a SCell. Hereinafter, for convenience, the PUCCH is referred to as a BFR-PUCCH.

As described above, an object of a BFR-PRACH standardized in Rel-15 is to transmit 'occurrence of beam failure + new beam RS (set) information' together to a base station. Meanwhile, an object of a BFR-PUCCH is to inform only 'occurrence of beam failure to SCell(s)'. And, to which SCell(s) beam failure occurred (e.g., CC index(es)), whether there is a new beam for corresponding SCell(s) and a corresponding beam RS ID when there is a new beam (and quality(s) (e.g., a RSRP or a SINR) of corresponding beam RS(s)) may be reported as a subsequent MAC-CE (or UCI). Here, a subsequent beam report is not necessarily triggered all the time and it is possible to deactivate SCell(s) which are BFR configured for a corresponding terminal after a base station receives a BFR-PUCCH. A reason for such a design is because dozens of SCells may be associated with one PCell/PSCell and because from a viewpoint of a base station, there may be a lot of terminals sharing one PCell/PSCell UL, and considering even such a case, it is desirable to minimize the amount of UL resources reserved for a SCell BFRQ to each terminal in a PCell/PSCell.

A beam failure detection (BFD) method considering network energy conservation (NES)

The above-described contents can be applied in combination with the methods proposed in this disclosure, which will be described later, or can be supplemented to clarify the technical characteristics of the methods proposed in this disclosure. In this document, "/" means "and," "or," "and/or," depending on the context.

An NR UE supports beamforming-based reception for downlink reception. That is, the UE receives a downlink signal using a specific beam among multiple candidate beams. In particular, when the UE is in connected mode, a base station and the UE maintain an optimal beam for the UE through a beam management (BM) process. Accordingly, the base station transmits a PDCCH/PDSCH using an optimal TX beam suitable for the UE, and the UE receives a PDCCH/PDSCH using an optimal RX beam.

Meanwhile, REL-18 NR discusses a method for reducing power consumption of network equipment such as base stations. For example, a base station operating multiple TX and/or RX beams may communicate with UEs only through specific beam resources at specific times and not communicate with UEs through other beam resources in order to reduce power consumption of the base station. In this case, the base station may disable some beam resources by turning them OFF for NES, and thus, the UE may have to change the RX beam selected through the BM operation due to the NES operation of the base station. Therefore, the present disclosure proposes an appropriate and optimal beam failure detection (beam failure recovery) operation of a UE belonging to a cell/base station supporting NES.

In other words, the present disclosure proposes a method for performing BFD by applying different reference signals (RS) depending on whether a UE that attempts to connect to a base station performing network energy saving (NES) operation or is connected to a base station performs NES operation.

According to the current standard, a UE performs beam management (BM) related measurements (e.g., L1-RSRP/SINR), and it is up to the UE implementation whether to change the RX beam to receive BM-RS. However, when a base station turns on or off multiple antenna elements due to NES operation, the UE may be required to adjust the RX beam so as to optimize the base station's adaptation to the number of active antenna elements. For example, the base station may inform the UE of the CSI-RS resource (set) index to which the RX beam needs to be adjusted to receive the CSI-RS resource (set), which may require processing time relaxation.

In the present disclosure, a base station operating in NES mode for NES may mean performing the following operations. For example, a base station can configure multiple OFF intervals (discontinuous transmission (DTX) intervals of the base station), which are OFF intervals in which transmission of a specific DL signal is turned off for a specific time interval in advance. Then, the base station can dynamically indicate one of the OFF intervals to the UE, thereby informing that the corresponding DL signal will not be transmitted for a predefined time interval, thereby reducing power consumption of the base station and the UE. In addition, although the OFF interval is described in the time domain for convenience of explanation, the NES operation is not limited thereto. For example, an OFF region can also be configured in the frequency domain through BWP switching, dynamic RB adaptation, etc. in the frequency domain. In addition, in the spatial domain, for example, when a specific antenna port of the base station is turned OFF semi-statically or dynamically, the base station does not transmit and/or receive a wireless signal through the corresponding antenna port, thereby reducing power consumption of the base station and the UE, and it may also mean the mode of action being obtained.

The base station can perform the NES mode operation for at least one domain in the time/frequency/space domain. For example, transmission and/or reception of wireless signals can be performed by turning off a specific interval in the time domain and/or a specific frequency region in the frequency domain and/or a specific antennal port(s) in the spatial domain.

In the present disclosure, a base station can set multiple RS resource sets (e.g., CSI-RS resource sets or SSB index sets) for each UE or multiple UEs (e.g., UE groups) for BFD, and can assign a set index to each RS resource set.

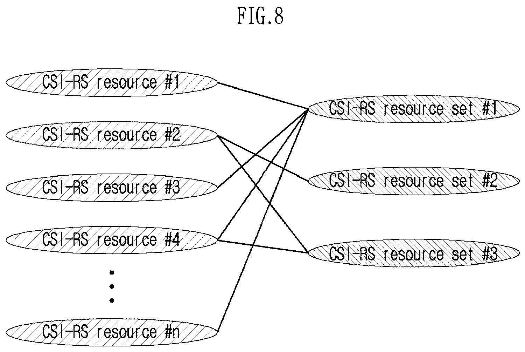

FIG. 8 illustrates the configuration of a CSI-RS resource set in a wireless communication system to which the present disclosure can be applied.

Referring to FIG. 8, a base station can configure multiple CSI-RS resources and multiple CSI-RS resource sets for a UE. Here, a single CSI-RS resource set may comprise one or more CSI-RS resources, and the same CSI-RS resource may belong to different CSI-RS resource sets (e.g., CSI-RS resource #2).

Embodiment 1: BFD method according to NES

According to the existing standard, a UE measures radio link quality through a DL RS that is in a QCL relationship with a PDCCH DM-RS that the UE receives among DL RSs determined by $q_0$ set (periodic CSI-RS of a single port), and declares a beam failure if a beam failure instance (BFI) is found more than a predetermined number of times over a predetermined period of time.

According to the present embodiment, a base station can configure multiple RS resource sets (i.e., these can be referred to as BFD RS sets, for example, periodic CSI-RS resource sets or SSB index sets) as $q_0$ sets for beam failure detection (BFD). Here, the base station can configure a set index for each RS resource set. Based on this configuration, a UE can select one RS resource set among the multiple RS resource sets and perform a BFD operation.

In addition, in the present disclosure, for the BFD operation of the UE, different first time periods and second time periods can be configured/determined according to one or more of the following cases:

- Case 1: A first period operating in NES mode and a second period operating in non-NES mode
- Case 2: A first period which is a Cell DTX inactive time (i.e., a time period during which the base station does not perform TX for a specific cell) and a second period which is a Cell DTX active time (i.e., a time period during which the base station performs TX for a specific cell)
- Case 3: A first period, which is a UE DRX inactive time (i.e., a time period during which the UE does not perform RX) and a second period, which is a UE DRX active time (i.e., a time period during which the UE performs RX)

Depending on the configuration of the base station, only the second period may be configured or both the first period and the second period may be configured per cell, and/or per BWP, and/or per frequency, and/or per RS for radio link failure (RLF), and/or per antenna port (AP), and/or per AP group, and/or per antenna element group.

In addition, the base station can separately set the first period and the second period for each of the cases described above. In this case, there may be cases where a specific time duration belongs to the first period or the second period for different cases. Considering this, the UE can perform the operation of the first period proposed in the present disclosure when the specific time duration belongs only to the first period, and can perform the operation of the second period proposed in the present disclosure when the specific time duration belongs only to the second period. If the first period and part (or all) of the second period overlap, the UE can perform only the operation of the first period proposed in the present disclosure in the overlapping period or can perform the operation of the first period preferentially. Alternatively, conversely, if the first period and part (or all) of the second period overlap, the UE can perform only the operation of the second period proposed in the overlapping period or can perform the operation of the second period preferentially.

In addition, according to the present embodiment, for NES operation, a base station configures multiple RS resource sets for BFD RS to a UE, and each RS resource set can be assigned a set index, and the base station can explicitly configure an RS resource set that is linked for each set index. In addition, based on an explicit command/configuration or implicit rule of the base station, or based on the first and second periods, the base station and the UE can activate only one set index, i.e., only one RS resource set. Alternatively, based on an explicit command/configuration or implicit rule of the base station, or based on the first and second periods, the base station and the UE can activate RS resource(s) mapped to one RS resource set in a changed (i.e., different) manner. The UE can determine only specific RS resource set(s) activated by the above method as valid BFD RSs, and perform BFD using only valid BFD RSs.

Unless explicitly distinguished between a BFD RS and a BFD RS set in this disclosure, even if only BFD RS is mentioned, the BFD RS can be interpreted as a BFD RS set, which is a $q_0$ set for BFD.

In addition, the base station can configure a BFD-RS RS resource set having one or more sub-configurations for the UE. Here, each sub-configuration can be assigned a sub-configuration index, and the base station can explicitly configure one or more RS resources that are linked/associated for each sub-configuration index. Here, the base station and the UE can activate only the RS resource(s) corresponding to one sub-configuration index according to the explicit command/configuration or implicit rule of the base station or according to the first and second periods. Alternatively, the base station and the UE can activate RS resource(s) mapped to one sub-configuration index in a changed (i.e., different) manner according to the explicit command/configuration or implicit rule of the base station or according to the first and second periods. The UE can determine only specific RS resource set(s) activated by the above method as valid BFD RS and perform BFD using only valid BFD RS.

- Option 1: RS resource(s) mapped to a single RS resource set configured for BFD-RS in different time periods may be configured/activated/applied differently (i.e., differently).

For example, in the first time period, only RS resource #1 may be mapped to the RS resource set, and in the second time period, both RS resource #1 and RS resource #2 may be mapped to the RS resource set. As another example, in the first time period, only RS resource #1 may be mapped to the RS resource set, and in the second time period, RS resources #2 and #3, which do not include RS resource #1, may be mapped to the RS resource set.

Alternatively, for different time periods, RS resources mapped to a single RS resource set can be configured/activated/applied differently (i.e., differently) via DCI, MAC CE, or another RRC message received from the base station. For example, via DCI, MAC CE, or another RRC message, the base station can indicate that only RS resource #1 is mapped to the RS resource set in the first inteval, and that both RS resource #1 and RS resource #2 are mapped to the RS resource set in the second inteval.

- Option 2: Different RS resource sets configured for BFD-RS can be configured/activated/applied in different time periods. In this manner, the base station can configure multiple RS resource sets for BFD-RS via higher layer messages (e.g., RRC messages) and indicate the UE to activate only one RS resource set via DCI, MAC control elements (CEs), or RRC messages. Alternatively, depending on the first and second periods, BFD may be performed using the activated RS resource set so that only one specific RS resource set set for the period is activated.

For example, RS resource sets #a, #b, #c, and #d may be configured by an RRC message, and an RS resource set (e.g., RS resource set #b) to be initially activated or deactivated may be indicated by an RRC message. A UE that receives this RRC message may configure the RS resource sets and activate or deactivate the indicated RS resource set together.

As another example, RS resource sets #a, #b, #c, #d can be configured by RRC message, and an RS resource set (e.g., RS resource set #b) to be activated or deactivated can be indicated by DCI or MAC CE or another RRC message. A UE can configure RS resource sets #a, #b, #c, #d by RRC message, and activate a deactivated RS resource set or deactivate an activated RS resource set according to DCI or MAC CE or another RRC message. Here, when only one RS resource set is activated at a time, activation of a specific RS resource set can cause deactivation of other RS resource sets. In addition, for example, when two RS resource sets are configured, deactivation of a specific RS resource set can cause activation of another RS resource set. Alternatively, all RS resource sets can be indicated to be deactivated or all RS resource sets can be indicated to be activated, by DCI or MAC CE or another RRC message.

Alternatively, in the first period, a first BFD-RS RS resource set may be configured/activated/applied, and in the second period, a second BFD-RS RS resource set may be configured/activated/applied. Here, the first RS resource set may be a default BFD-RS RS resource set (i.e., in the absence of explicit configuration/indication, the first RS resource set may be configured/activated/applied).

Alternatively, in the first period, a SSB-based BFD-RS RS resource set may be configured/activated/applied, and in the second period, a separate CSI-RS-based BFD-RS RS resource set configured by the base station may be configured/activated/applied.

- Option 3: A single RS resource set configured for BFD-RS in different time periods may include multiple sub-configurations, and each sub-configuration may be configured to include one or more RS resources. This will be described in detail with reference to the drawings.

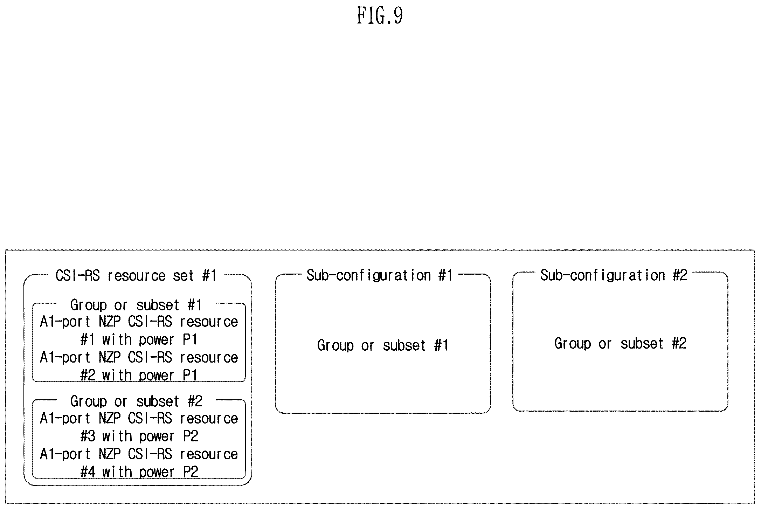

FIG. 9 illustrates a BFD RS configuration method according to an embodiment of the present disclosure.

Referring to FIG. 9, a single RS resource set for BFD-RS may include multiple sub-configurations #1 and #2. Sub-configuration #1 may be configured to include one or more RS resources (e.g., one of group (or subset) #1 and group (or subset) #2, or one or more RS resources from RS resources #1 to #4), and sub-configuration #2 may be configured to include one or more RS resources (e.g., one of group (or subset) #1 and group (or subset) #2, or one or more RS resources from RS resources #1 to #4).

The UE may select one of multiple sub-configurations based on a time period or upon indication from the base station, and configure/activate/apply BFD-RS using RS resources mapped to the index of the selected sub-configuration.

For example, in the first period, only the RS resource for sub-configuration index #1 may be applied as a BFD RS, and in the second period, only the RS resources for sub-configuration indexes #1 and #2 may be applied as BFD RS. Alternatively, in the first period, only the RS resource for sub-configuration index #1 may be applied as a BFD RS, and in the second period, only the RS resource for sub-configuration index #2 may be applied as a BFD RS.

Alternatively, by indicating a sub-configuration index through DCI or MAC CE or another RRC message received from the base station, the RS resource mapped thereto may be configured/activated/applied as a BFD RS. For example, the base station may indicate/configure a sub-configuration index through DCI or MAC CE or another RRC message. Accordingly, in the first period, the RS resource of sub-configuration index #1 may be indicated to be configured/activated/applied, and in the second period, the RS resource of sub-configuration index #2 may be indicated to be configured/activated/applied.

In the above-described proposed methods proposed in the present disclosure, if, according to an explicit command or implicit rule of the base station or according to the first period and the second period, it can be determined that not one but N (N is an integer greater than 0) sub-configurations are used/applied/activated among the total L (L is an integer greater than 0) sub-configurations (N <= L). In this case, the UE can select one sub-configuration among the N sub-configurations(s) according to one of the following rules, and configure/activate/apply RS resources mapped to the selected sub-configuration index as BFD-RS. Here, the base station and the UE can separately configure the L value or the N value according to the first period and the second period, or can configure the L value or the N value for each period to the same or different values.

- Option 1: Among N sub-configurations, the sub-configuration corresponding to the lowest sub-configuration index may be selected.

- Opt 2: Among N sub-configurations, the sub-configuration corresponding to the highest sub-configuration index may be selected.

- Opt 3: Among N sub-configurations, the sub-configuration corresponding to the sub-configuration index indicated by the base station via MAC CE or DCI may be selected.

- Opt 4: Among N sub-configurations, the sub-configuration designated by the base station via an RRC message, or the default or highest priority sub-configuration may be selected.

Meanwhile, if there is no valid BFD RS in the explicit configuration, or if it is the first period, or if there is a DCI/MAC CE/RRC message indication for the first period of the base station, the UE may select a BFD RS (or a BFD RS set (i.e., the $q_0$ set)) in the following manner by applying the implicit configuration rules.

Here, for example, i) when a command to activate a specific RS is not received from a base station for a corresponding cell during handover or cell addition or cell activation, or ii) when a base station indicates/configures to deactivate all RS resource sets for BFD RS set by explicit configuration, or iii) when all beam resources corresponding to RS resource sets for BFD RS configured by explicit configuration are turned OFF (i.e., when all RS resources in the RS resource set are turned OFF) according to NES operation, or iv) in the case of the first period, a UE may determine that there is no valid BFD RS (or BFD RS set) in the explicit configuration.

In addition, if there is no valid BFD-RS in the explicit configuration or if it is the first period, the UE may perform BFD by applying one of the following methods. If there is a valid BFD-RS in the explicit configuration or if it is the second period, the UE may perform BFD by applying the valid BFD-RS in the explicit configuration.

Method 1: The UE may determine a periodic CSI-RS (P-CSI-RS) having the same index as a CSI-RS linked to a TCI state configured for a CORESET for PDCCH monitoring (i.e., provided by the TCI state) or an SSB having a QCL relationship with the linked CSI-RS as the BFD RS. Alternatively, the UE may determine an RS resource set including the periodic CSI-RS as the BFD RS set (i.e., $q_0$).

For example, when a specific beam is turned off, a base station can change a TCI state for PDCCH monitoring performed by a UE. In this case, the UE can change the TCI state for PDCCH monitoring (according to the indication of the base station), determine a RS corresponding to the changed TCI state as a BFD RS (or determine the RS resource set including the RS as a BFD RS set) and perform BFD.

For example, if there is no valid BFD-RS in the explicit configuration, or if it is the first period, the UE may determine the SSB that is in a QCL relationship with the CSI-RS linked/associated with the TCI state associated with the CORESET for PDCCH monitoring as the BFD-RS. On the other hand, if there is a valid BFD-RS in the explicit configuration, or if it is the second period, the UE may determine the valid CSI-RS in the explicit configuration as the BFD-RS and perform BFD.

Method 2: If there are one or more CORESETs for PDCCH monitoring, the UE may select one of the CORESETs according to a specific rule. And, the UE may determine a P-CSI-RS or SSB having the same index as a CSI-RS linked to the TCI state configured for the selected CORESET (i.e., provided by the TCI state) as a BFD RS (or determine an RS resource set including P-CSI-CS as a BFD RS set), or determine a P-CSI-RS or SSB that is in a QCL relationship with the TCI state configured for the selected CORESET (i.e., in a QCL relationship with the RS provided in the TCI state) as a BFD RS (or determine an RS resource set including P-CSI-CS as a BFD RS set). In addition, an SSB that is in a QCL relationship with the TCI state linked/associated with the selected CORESET may be determined as a BFD-RS.

In this case, for example, the following specific rules may be considered:

Method 2-1: Among one or more CORESETs for PDCCH monitoring, the lowest (or highest) CORESET may be selected.

Method 2-2: Among a plurality of CORESETs, a P-CSI-RS or SSB having the same index as a CSI-RS linked to a TCI state configured in a specific CORESET designated by a base station or a default or pre-defined CORESET (i.e., provided by the TCI state) may be determined as a BFD RS (or an RS resource set including a P-CSI-CS may be determined as a BFD RS set), or a P-CSI-RS having a QCL relationship with the linked TCI state (i.e., a QCL relationship with the RS provided in the TCI state) or an SSB with QCL relationship with a CSI-RS linked/associated with TCI state may be determined as a BFD RS (or an RS resource set including a P-CSI-CS may be determined as a BFD RS set).

In this way, if there is no valid BFD-RS in the explicit configuration or if it is the first period, the UE can determine the SSB that is in a QCL relationship with the CSI-RS linked/associated with the TCI state linked/associated with the selected CORESET as the BFD-RS. On the other hand, if there is a valid BFD-RS in the explicit configuration or if it is the second period, the UE can determine the valid CSI-RS in the explicit configuration as the BFD-RS and perform BFD.

Method 3: A P-CSI-RS or SSB that is in a QCL relationship with a TCI state determined by a random access channel (RACH) procedure (i.e., a random access procedure) most recently executed by a UE (i.e., provided in the TCI state or in a QCL relationship with a corresponding RS provided in the TCI state) may be determined as a BFD RS (or an RS resource set including a P-CSI-CS may be determined as a BFD RS set). Alternatively, a P-CSI-RS or SSB having the same index as a CSI-RS linked to a TCI state determined by a RACH procedure most recently executed by a UE (i.e., provided in the TCI state) may be determined as a BFD RS. Alternatively, a CSI-RS or SSB selected by a RACH procedure most recently executed may be determined as a BFD RS (or an RS resource set including a P-CSI-CS may be determined as a BFD RS set). Alternatively, a P-CSI-RS or SSB that is in a QCL relationship with a CSI-RS selected according to the most recently RACH procedure executed by a UE may be determined as a BFD RS (or, the RS resource set including the P-CSI-CS may be determined as a BFD RS set).

Method 4: A base station may determine a P-CSI-RS or SSB corresponding to the best-ranked SSB or an SSB index higher than a threshold among SSB beams measured by a UE as a BFD RS (or determine a RS resource set including the P-CSI-CS as a BFD RS set), or determine a P-CSI-RS in a QCL relationship with the corresponding P-CSI-RS as a BFD RS (or determine a RS resource set including the P-CSI-CS as a BFD RS set).

Method 5: A base station can indicate to a UE whether a specific SSB beam or CSI-RS beam is turned on or off. In this case, a SSB linked to a TCI state indicated as "on" (i.e., provided by the TCI state) or a P-CSI-RS with the same index as a CSI-RS linked to a TCI state indicated as "on" (i.e., provided by the TCI state) may be determined as a BFD RS (or an RS resource set including a P-CSI-CS may be determined as a BFD RS set), alternatively, a P-CSI-RS with a QCL relationship to a TCI state indicated as "on" (i.e., a QCL relationship with an RS provided by the TCI state) may be determined as a BFD RS (or an RS resource set including a P-CSI-CS may be determined as a BFD RS set). For example, a P-CSI-RS linked/associated with an SSB index indicated as on may be determined as a BFD RS (or an RS resource set including a P-CSI-CS may be determined as a BFD RS set), or a P-CSI-RS in a QCL relationship with an SSB index indicated as on may be determined as a BFD RS (or an RS resource set including a P-CSI-CS may be determined as a BFD RS set).

Method 6: An SSB or CSI-RS located in a frequency region within or outside the UE's active BWP may be determined as a BFD-RS. In this case, the SSB may be a cell-defined SSB (i.e., a CD-SSB) or a non-CD-SSB. A CD-SSB is transmitted including the master information block (MIB) of the physical broadcast channel (PBCH), and a non-CD-SSB is transmitted without including the MIB of the PBCH.

For example, if there is no valid BFD-RS in the explicit configuration or in the first period, the UE may determine a CSI-RS linked to a TCI state associated with a CORESET for PDCCH monitoring, or an SSB in a QCL relationship with the linked CSI-RS, as a BFD-RS. Here, some or all of the SSB or CSI-RS determined as BFD-RS may be located in a frequency range outside the active BWP of the UE. On the other hand, if there is a valid BFD-RS in the explicit configuration or if it is the second period, a valid CSI-RS in the explicit configuration may be determined as a BFD-RS and BFD may be performed.

Meanwhile, according to an embodiment of the present disclosure, a CSI report configuration (i.e., CSI-ReportConfig) may include multiple CSI report sub-configurations. L (>1) sub-configurations may be configured within a CSI-ReportConfig configuration, and each sub-configuration may correspond to one of a spatial domain adaptation pattern or a power domain adaptation pattern. Here, the spatial domain adaptation pattern may correspond to a specific number of antenna ports (or an antenna port on/off pattern) or may correspond to a specific CSI-RS power value (e.g., a CSI-RS power value determined by a powerControlOffsetSS parameter, which is a power offset value between an SSS and a CSI-RS). Additionally, the power domain adaptation pattern may mean that the power offset value (e.g., the power offset value determined by the powerControlOffset parameter, which is the power offset value between PDSCH and CSI-RS, the powerControlOffsetSS parameter, which is the power offset value between SSS and CSI-RS, etc.) changes.

For a CSI report configuration that includes one or more sub-configurations, at least one of the following parameters may be included and configured for each sub-configuration for Type 1 spatial domain (SD) adaptation:

- N1, N2 for a single panel, and N1, N2, Ng for a multi-panel: where N1 and N2 represent the number of antenna ports in the first and second dimensions, respectively, and Ng may represent the number of panels.
- Port subset indication
- Rank restriction
- Codebook subset restriction
- Codebook type supported for PMI (e.g., Type-I or Type-II)
- Report quantity: This indicates the CSI-related quantity to be reported.
- Report Frequency Configuration (reportFreqConfiguration): This indicates the reporting configuration in the frequency domain.
- Group identifier for NZP CSI-RS resource(s) within the resource set for channel measurements.

For example, a base station may configure a specific CSI-RS resource set within a CSI report configuration, and may configure multiple sub-configurations according to different spatial domain adaptation patterns or different power domain adaptation patterns within the specific CSI-RS resource set. Here, each sub-configuration may be mapped to one BFD-RS. Accordingly, depending on which sub-configuration is used/applied/activated for the UE's CSI-RS report, the UE may apply the BFD-RS mapped to the corresponding sub-configuration and perform BFD based on this. If N (N is an integer greater than 0) sub-configuration(s) are determined to be used/applied/activated among a total of L (L is an integer greater than 0) sub-configurations (N <= L), the UE may select one sub-configuration among the N sub-configuration(s) according to one of the following rules. Then, the UE can apply the BFD-RS mapped to the selected sub-configuration and perform BFD based on this.

- Opt 1: Among N sub-configurations, the sub-configuration corresponding to the lowest sub-configuration index may be selected.
- Opt 2: Among N sub-configurations, the sub-configuration corresponding to the highest sub-configuration index may be selected.
- Opt 3: Among N sub-configurations, the sub-configuration corresponding to the sub-configuration index indicated by the base station via MAC CE or DCI may be selected.
- Opt 4: Among N sub-configurations, the sub-configuration designated by the base station via an RRC message, or the sub-configuration corresponding to the default or highest priority may be selected.

A UE can determine an activated RS resource set (i.e., BFD RS or BFD RS set) according to the method described above for beam failure detection, and determine the activated RS resource set as $q_0$ set. Then, the following beam failure detection procedure can be performed.

Whether a UE changes an RX beam to receive a BM-RS when performing BM-related measurements (e.g., L1-RSRP/SINR) is up to the UE implementation. However, when a base station turns on or off multiple antenna elements, a UE may need to adjust an RX beam so as to optimize the base station's adaptation to the number of active antenna elements. For example, a base station may inform a UE of a CSI-RS resource (set) index that an RX beam needs to be adjusted to receive the CSI-RS resource (set), which may require processing time relaxation.

To detect a beam failure and provide a beam failure instance (BFI) indication to a higher layer (i.e., MAC), a UE assesses whether downlink radio link quality for CSI-RS resources in the estimated set q0 during the last $T_{Evaluate\_BFD\_CSI-RS}$ ms period becomes worse than the threshold $Q_{out\_LR\_CSI-RS}$ within the $T_{Evaluate\_BFD\_CSI-RS}$ ms period.

The UE assesses the downlink radio link quality of a serving cell based on the reference signals within the q0 set to detect beam failure in the following:

- PCell in standalone (SA), dual connectivity (NR-DC), or NE-DC operation modes,
- PSCell in NR-DC and EN-DC operation modes,
- SCell in SA, NR-DC, NE-DC, or EN-DC operation modes,
- PSCell deactivated in NR-DC and EN-DC operation modes.

The RS resource configurations in the set $q_0$ on PCell, PSCell or deactivated PSCell (if configured with bfd-and-RLM with value true) can be periodic CSI-RS resources and/or SSBs. RS resource configuration in the set $q_0$ on SCell shall be periodic CSI-RS. UE is not required to perform beam failure detection outside the active DL BWP. UE is not required to meet the requirements in clause 8.5.2 and 8.5.3 of TS 38.213 if UE does not have set $q_0$. UE is not required to perform beam failure detection on a deactivated SCell, and also not required to perform beam failure detection on resources which is implicitly configured for a deactivated SCell. When more than 2 periodic CSI-RS resources on a CC (component carrier) are configured in the set $q_0$ for current SCell or implicitly configured in the set $q_0$ for other SCell, it is up to UE implementation to select two of CSI-RS resources in active BWP in current CC to perform beam failure detection. UE is not required to perform beam failure detection on a SCell on which $q_1$ is not configured.

On each RS resource configuration in the set $q_0$, the UE shall estimate the radio link quality and compare it to the threshold $Q_{out\_LR}$ for the purpose of accessing downlink radio link quality of the serving cell beams.

The threshold $Q_{out\_LR}$ is defined as the level at which the downlink radio level link of a given resource configuration on set $q_0$ cannot be reliably received and shall correspond to the BLERout = 10% block error rate of a hypothetical PDCCH transmission. For SSB based beam failure detection, $Q_{out\_LR\_SSB}$ is derived based on the hypothetical PDCCH transmission parameters. For CSI-RS based beam failure detection, $Q_{out\_LR\_CSI-RS}$ is derived based on the hypothetical PDCCH transmission parameters.

Upon request the UE shall deliver configuration indexes from the set $q_1$ as specified in TS 38.213, to higher layers, and the corresponding L1-RSRP measurement provided that the measured L1-RSRP is equal to or better than the threshold $Q_{in\_LR}$, which is indicated by higher layer parameter rsrp-ThresholdSSB. The UE applies the $Q_{in\_LR}$ threshold to the L1-RSRP measurement obtained from an SSB. The UE applies the $Q_{in\_LR}$ threshold to the L1-RSRP measurement obtained for a CSI-RS resource after scaling a respective CSI-RS reception power with a value provided by higher layer parameter powerControlOffsetSS. The RS resource configurations in the set $q_1$ can be periodic CSI-RS resources or SSBs or both SSB and CSI-RS resources. UE is not required to perform candidate beam detection outside the active DL BWP. UE is not required to perform candidate beam detection on a SCell on which $q_1$ is not configured.

For a deactivated SCG, the UE may be provided via an RRC reconfiguration message with tci-info for PDCCH/PDSCH reception at the transition from deactivated SCG to activated SCG while the SCG is deactivated. After the reception of the RRC reconfiguration message the UE shall perform the BFD on the PSCell of the deactivated SCG using the TCI states accroding to tci-info specified in clause 6.3.2 in TS38.331. The thresholds $Q_{out,LR}$ and $Q_{in,LR}$ correspond to the default value of rlmInSyncOutOfSyncThreshold for $Q_{out}$, and to the value provided by rsrp-ThresholdSSB or rsrp-ThresholdBFR, respectively.

The physical layer in the UE assesses the radio link quality according to the set $q_0$, $q_{0,0}$, or $q_{0,1}$, of resource configurations against the threshold $Q_{out,LR}$. For the set $q_0$, the UE assesses the radio link quality only according to SS/PBCH blocks on the PCell or the PSCell or periodic CSI-RS resource configurations that are quasi co-located, with the DM-RS of PDCCH receptions by the UE. The UE applies the $Q_{in,LR}$ threshold to the L1-RSRP measurement obtained from a SS/PBCH block. The UE applies the $Q_{in,LR}$ threshold to the L1-RSRP measurement obtained for a CSI-RS resource after scaling a respective CSI-RS reception power with a value provided by powerControlOffsetSS.

In non-DRX mode operation, the physical layer in the UE provides an indication to higher layers (i.e. MAC) when the radio link quality for all corresponding resource configurations in the set $q_0$, or in the set $q_{0,0}$ or $q_{0,1}$, that the UE uses to assess the radio link quality is worse than the threshold $Q_{out,LR}$. The physical layer informs the higher layers (i.e. MAC) when the radio link quality is worse than the threshold $Q_{out,LR}$ with a periodicity determined by the maximum between the shortest periodicity among the SS/PBCH blocks on the PCell or the PSCell and/or the periodic CSI-RS configurations in the set $q_0$, $q_{0,0}$, or $q_{0,1}$ that the UE uses to assess the radio link quality and 2 msec. In DRX mode operation, the physical layer provides an indication to higher layers when the radio link quality is worse than the threshold $Q_{out,LR}$ with a periodicity determined as described in TS 38.133.

For one or more of the parameters used in the above-described operation, the base station may configure different parameter values for each RS resource set for BFD or for each sub-configuration. In this case, the UE may perform beam failure detection by applying the corresponding value to the parameters depending on which RS resource set is valid and activated.

Alternatively, the base station may configure different parameter values depending on whether it is NES mode or non-NES mode, or depending on whether it is the first time period or the second time period. Here, the base station may configure/indicate the UE to be in NES mode or non-NES mode. The UE may perform beam failure detection by applying the corresponding values to the parameters depending on whether the currently indicated or configured mode is NES mode or non-NES mode, or depending on whether it is the first time period or the second time period. In addition, different parameter values may be configured depending on which sub-configuration is being applied/used/activated. Accordingly, the UE may detect beam failure by applying the parameters according to the corresponding sub-configuration depending on which sub-configuration is currently indicated, configured, or activated.

- BFD evaluation period ($T_{Evaluate\_BFD}$): This refers to a period for estimating downlink radio link quality when determining whether the radio link quality for RS resources in the set $q_0$ is worse than the threshold $Q_{out\_LR}$ in order to detect beam failure and provide a BFI indication to the higher layer, and corresponds to a predetermined value based on the frequency band, whether DRX is applied, DRX cycle, etc.
- The value of the higher layer parameter rlmInSyncOutOfSyncThreshold for the RLM threshold or the default value:

The in-sync block error rate (BLER) (i.e., $BLER_{in}$) and the out-of-sync BLER (i.e., $BLER_{out}$) for generating in-sync/out-of-sync indications are determined from the higher layer parameter rlmInSyncOutOfSyncThreshold, and if the higher layer parameter rlmInSyncOutOfSyncThreshold is not provided, the setting 0 is applied.

- Threshold $Q_{out,LR}$: Defined as the level at which the downlink radio level link of the given resource configuration of the $q_0$ set cannot be reliably received. It corresponds to the default value (i.e., set to 0) of the higher layer parameter rlmInSyncOutOfSyncThreshold, and corresponds to a $BLER_{out}$ = 10% block error rate of a hypothetical PDCCH transmission.

- Threshold $Q_{in,LR}$: Defined as the level at which a downlink radio link with a given resource configuration of the $q_0$ set can be reliably received, and is a value provided by the higher layer parameter rsrp-ThresholdSSB or rsrp-ThresholdB. The L1-RSRP threshold is indicated by rsrp-ThresholdSSB or rsrp-ThresholdB.

- Higher layer parameter powerControlOffsetSS for SS power control offset: Indicates the power offset of the NZP CSI-RS for the SSS RE in dB.

- Higher layer parameter rsrp-ThresholdSSB for SSB RSRP threshold: Indicates the L1-RSRP threshold used by the UE to determine whether a candidate beam can be used for contention-free random access to recover from beam failure.

- Higher layer parameter for RSRP threshold of BFR rsrp-ThresholdBFR: Indicates the L1-RSRP threshold used by the UE to determine whether a candidate beam can be included in the MAC CE for beam failure recovery.

- Block error rate of hypothetical PDCCH transmission $BLER_{out}$: This can be defined as, for example, 10%.

- Hypothetical PDCCH transmission parameters: DCI format = 1-0, number of control OFDM symbols = 2, control channel element (CCE) aggregation level = 8, ratio of hypothetical PDCCH RE energy to average SSS RE energy = 0 dB, ratio of hypothetical PDCCH DMRS energy to average SSS RE energy = 0 dB, bandwidth (number of PRBs) = 24, subcarrier spacing (kHz) = remaining minimum system information (RMSI) same as SCS in CORESET, DMRS precoder granularity = resource element group (REG) bundle size, CP length = normal, mapping of REG to CCE = distributed

In addition, the base station can configure different parameter values depending on whether specific or some antenna ports (APs) are turned off. Here, the base station can i) configure/indicate the UE whether specific or some APs are turned off, or ii) configure/indicate the UE which APs are turned off. In this case, the UE can perform beam failure detection by applying the corresponding value to the parameters depending on whether specific or some APs are turned off. Additionally, the UE can detect beam failure by applying corresponding values to parameters depending on which sub-configuration is applied/used/activated.

In addition, the base station can configure different parameter values depending on whether the transmission power of specific or some APs has been reduced. Here, the base station can i) configure/indicate the UE whether the transmission power of specific or some APs has been reduced, or ii) configure/indicate the UE which AP(s) has been reduced. In this case, the UE can perform beam failure detection by applying the corresponding value to the parameters depending on whether the transmission power of specific or some APs has been reduced.

For the above operation, when specific AP(s) are changed to off state or when the transmission power of specific AP(s) is reduced or when specific AP(s) are changed to on state or when the transmission power of specific AP(s) is increased or changed to normal power, the base station can notify the UE of this. The base station can notify the UE through DCI or MAC CE or RRC message.

Accordingly, the UE may be configured to perform beam failure detection by measuring L1-RSRP while excluding the specific or some AP(s) when the AP(s) are in an off state. On the other hand, if the AP(s) are not in an off state, the UE may be configured to perform beam failure detection by measuring L1-RSRP without excluding the corresponding AP(s).

In addition, the UE may be configured to perform beam failure detection by measuring L1-RSRP while excluding the AP(s) when the transmission power of specific or some AP(s) is in a reduced state. On the other hand, if the transmission power of the AP(s) is not reduced, the UE may be configured to perform beam failure detection by measuring L1-RSRP without excluding the AP(s).

In another way, whether the UE performs beam failure detection by applying a value configured by the base station for the one or more parameters or by applying a positive offset value or a negative offset value can be individually determined/configured for each RS resource set or for each sub-configuration. For example, if a specific RS resource set or specific eab-configuration is valid and activated, the UE can perform beam failure detection by applying a positive offset value or a negative offset value to a value configured by the base station for the one or more parameters. On the other hand, if an RS resource set or sub-configuration is valid and activated, the UE can perform failure detection according to a value configured by the base station.

In addition, when configured or indicated as NES mode or configured or indicated as the first time period, the UE may perform beam failure detection by applying a positive offset value or a negative offset value to the value configured by the base station for one or more of the above parameters. On the other hand, when in non-NES mode or in the second time period, beam failure detection may be performed according to the value configured by the base station.

In addition, the UE may perform beam failure detection by applying a positive offset value or a negative offset value to a value configured by the base station for one or more parameters when some AP(s) are in an off state. On the other hand, if some AP(s) are not in an off state, beam failure detection may be performed according to a value configured by the base station. Alternatively, the UE may perform beam failure detection by applying a positive offset value or a negative offset value to a value configured by the base station for one or more parameters when the transmission power of some AP(s) is in a reduced state. On the other hand, if the transmission power of some AP(s) is not in a reduced state, beam failure detection may be performed according to a value configured by the base station.

In the above method, the positive or negative offset can be configured by the base station, and may be configured per cell, and/or per BWP, and/or per frequency, and/or per RS for radio link failure (RLF) (e.g., per BFD RS), and/or per AP, and/or per AP group, and/or per antenna element group.

In the embodiment of the present disclosure described above, in the method of applying parameters according to sub-configuration, if among the total L sub-configurations (L is an integer greater than 0), it can be determined that N sub-configuration(s) (N is an integer greater than 0) are used/applied/activated (N <= L). In this case, the UE can select one sub-configuration among the N sub-configurations(s) according to one of the following rules, and apply parameters according to the selected specific sub-configuration to detect beam failure.

- Opt 1: Among N sub-configurations, the sub-configuration corresponding to the lowest sub-configuration index may be selected.
- Opt 2: Among N sub-configurations, the sub-configuration corresponding to the highest sub-configuration index may be selected.
- Opt 3: Among N sub-configurations, the sub-configuration corresponding to the sub-configuration index indicated by the base station via MAC CE or DCI may be selected.
- Opt 4: Among N sub-configurations, the sub-configuration designated by the base station via an RRC message or corresponding to the default or highest priority may be selected.

Meanwhile, for at most one or two antenna ports (APs)(s) for L1-RSRP/SINR, turning on/off of antenna elements of the base station may result in a change in the number of antenna elements associated with the AP for a CSI-RS for L1-RSRP/SINR or the number of AP(s) for a CSI-RS for L1-RSRP/SINR. For this purpose, an approach for the CSI framework may also be applied. For example, for a configured CSI-RS resource set, CSI-RS resource#1 having 2 APs (or 1 AP with 32 antenna elements) and CSI-RS resource #2 having 1 AP (or 1 AP with 8 antenna elements) may be configured, and switching between CSI-RS resource#1 and CSI-RS resource#2 may be performed based on an indication from the base station.

A similar approach can be applied for RLM/beam failure (since at most 1 or 2 AP(s) are configured for RLM/beam failure). For example, a similar approach can be applied for $Q_{in}/Q_{out}$ adjustment or two candidate sets for RLM/BFD/candidate beam RS (where one set has 2 APs and the other set has 1 AP).

When the physical layer of a UE provides one or more BFI indications to the higher layer (i.e., MAC) through the above-described process, the MAC layer of the UE triggers/performs the following beam failure recovery procedure.

The MAC entity may be configured by RRC per serving Cell or per BFD-RS set with a beam failure recovery procedure which is used for indicating to the serving gNB of a new SSB or CSI-RS when beam failure is detected on the serving SSB(s)/CSI-RS(s).

Beam failure is detected by counting beam failure instance indication from the lower layers to the MAC entity. If beamFailureRecoveryConfig is reconfigured by upper layers during an ongoing random access procedure for beam failure recovery for SpCell, the MAC entity shall stop the ongoing random access procedure and initiate a Random Access procedure using the new configuration. When the SCG is deactivated, the UE performs beam failure detection on the PSCell if bfd-and-RLM is set to true.

RRC configures the following parameters in the beamFailureRecoveryConfig, beamFailureRecoverySpCell-Config, beamFailureRecoverySCellConfig and the radioLinkMonitoringConfig for the Beam Failure Detection and Recovery procedure:

- beamFailureInstanceMaxCount for the beam failure detection (per serving cell or per BFD-RS set of serving cell configured with two BFD-RS sets);
- beamFailureDetectionTimer for the beam failure detection (per serving cell or per BFD-RS set of serving cell configured with two BFD-RS sets);
- beamFailureRecoveryTimer for the beam failure recovery procedure for SpCell;
- rsrp-ThresholdSSB: an RSRP threshold for the SpCell beam failure recovery;
- rsrp-ThresholdBFR: an RSRP threshold for the SCell beam failure recovery or for the beam failure recovery of BFD-RS set of serving cell;
- powerRampingStep: powerRampingStep for the SpCell beam failure recovery;

- powerRampingStepHighPriority: powerRampingStepHighPriority for the SpCell beam failure recovery;
- preambleReceivedTargetPower: preambleReceivedTargetPower for the SpCell beam failure recovery;
- preambleTransMax: preambleTransMax for the SpCell beam failure recovery;
- scalingFactorBI: scalingFactorBI for the SpCell beam failure recovery;
- ssb-perRACH-Occasion: ssb-perRACH-Occasion for the SpCell beam failure recovery using contention-free Random Access Resources;
- ra-ResponseWindow: the time window to monitor response(s) for the SpCell beam failure recovery using contention-free random access resources;
- prach-ConfigurationIndex: prach-ConfigurationIndex for the SpCell beam failure recovery using contention-free random access resources;
- ra-ssb-OccasionMaskIndex: ra-ssb-OccasionMaskIndex for the SpCell beam failure recovery using contention-free random access resources;
- ra-OccasionList: ra-OccasionList for the SpCell beam failure recovery using contention-free random access resources;
- candidateBeamRSList: list of candidate beams for SpCell beam failure recovery;
- candidateBeamRS-List-r16: list of candidate beams for SCell beam failure recovery or list of candidate beams for beam failure recovery of a serving Cell for BFD-RS set one;
- candidateBeamRS-List2-r17: list of candidate beams for beam failure recovery of a serving cell for BFD-RS set two.

The following UE variables are used for the beam failure detection procedure:

- BFI_COUNTER (per Serving Cell or per BFD-RS set of Serving Cell configured with two BFD-RS sets): counter for beam failure instance indication which is initially set to 0.

The MAC entity shall for each Serving Cell configured for beam failure detection:

1> if the Serving Cell is configured with two BFD-RS sets:

2> if beam failure instance indication for a BFD-RS set has been received from lower layers:

3> start or restart the beamFailureDetectionTimer of the BFD-RS set;
3> increment BFI_COUNTER of the BFD-RS set by 1;
3> if BFI_COUNTER of the BFD-RS set >= beamFailureInstanceMaxCount:

4> trigger a BFR for this BFD-RS set of the Serving Cell;

2> if BFR is triggered for both BFD-RS sets of the SpCell and the Beam Failure Recovery procedure is not successfully completed for any of the BFD-RS sets:

3> initiate a Random Access procedure on the SpCell;

2> if the Serving Cell is SpCell and the Random Access procedure initiated for beam failure recovery of both BFD-RS sets of SpCell is successfully completed:

3> set BFI_COUNTER of each BFD-RS set of SpCell to 0.
3> consider the Beam Failure Recovery procedure successfully completed.

2> if the beamFailureDetectionTimer of this BFD-RS set expires; or
2> if beamFailureDetectionTimer, beamFailureInstanceMaxCount, or any of the reference signals used for beam failure detection is reconfigured by upper layers or by the BFD-RS Indication MAC CE associated with a BFD-RS set of the Serving Cell:

3> set BFI_COUNTER of the BFD-RS set to 0.

2> if a PDCCH addressed to C-RNTI indicating uplink grant for a new transmission is received for the HARQ process used for the transmission of the Enhanced BFR MAC CE or Truncated Enhanced BFR MAC CE which contains beam failure recovery information of this BFD-RS set of the Serving Cell:

3> set BFI_COUNTER of the BFD-RS set to 0;
3> consider the Beam Failure Recovery procedure successfully completed for this BFD-RS set and cancel all the triggered BFRs of this BFD-RS set of the Serving Cell.

2> if the Serving Cell is SCell and the SCell is deactivated:

3> set BFI_COUNTER of each BFD-RS set of SCell to 0;
3> consider the Beam Failure Recovery procedure successfully completed and cancel all the triggered BFRs of all BFD-RS sets of the Serving Cell.

1> else:

2> if beam failure instance indication has been received from lower layers:

3> start or restart the beamFailureDetectionTimer;
3> increment BFI_COUNTER by 1;
3> if BFI_COUNTER >= beamFailureInstanceMaxCount:

4> if the Serving Cell is SCell:

5> trigger a BFR for this Serving Cell;

4> else if the Serving Cell is PSCell and, the SCG is deactivated:

5> if beam failure of the PSCell has not been indicated to upper layers since the SCG was deactivated or since the deactivated SCG was last reconfigured with BFD-RS:

6> indicate beam failure of the PSCell to upper layers.

4> else:

5> initiate a Random Access procedure on the SpCell.

2> if the beamFailureDetectionTimer expires; or
2> if beamFailureDetectionTimer, beamFailureInstanceMaxCount, or any of the reference signals used for beam failure detection is reconfigured by upper layers associated with this Serving Cell:

3> set BFI_COUNTER to 0.

2> if the Serving Cell is SpCell and the Random Access procedure initiated for SpCell beam failure recovery is successfully completed:

3> set BFI_COUNTER to 0;
3> stop the beamFailureRecoveryTimer, if configured;
3> consider the Beam Failure Recovery procedure successfully completed.

2> else if the Serving Cell is SCell, and a PDCCH addressed to C-RNTI indicating uplink grant for a new transmission is received for the HARQ process used for the transmission of the MAC CE for BFR which contains beam failure recovery information of this Serving Cell; or
2> if the SCell is deactivated:

3> set BFI_COUNTER to 0;
3> consider the Beam Failure Recovery procedure successfully completed and cancel all the triggered BFRs for this Serving Cell.

The MAC entity shall:

1> if the Beam Failure Recovery procedure determines that at least one BFR has been triggered and not cancelled for an SCell for which evaluation of the candidate beams has been completed and if none of the Serving Cell(s) of this MAC entity are configured with two BFD-RS sets:

2> if UL-SCH (uplink shared channel) resources are available for a new transmission and if the UL-SCH resources can accommodate the BFR MAC CE plus its subheader as a result of LCP (logical channel prioritization):

3> instruct the Multiplexing and Assembly procedure to generate the BFR MAC CE.

2> else if UL-SCH resources are available for a new transmission and if the UL-SCH resources can accommodate the Truncated BFR MAC CE plus its subheader as a result of LCP:

3> instruct the Multiplexing and Assembly procedure to generate the Truncated BFR MAC CE.

2> else:

3> trigger the SR for SCell beam failure recovery for each SCell for which BFR has been triggered, not cancelled, and for which evaluation of the candidate beams.

1> if the Beam Failure Recovery procedure determines that at least one BFR for any BFD-RS set has been triggered and not cancelled for an SCell for which evaluation of the candidate beams; or
1> if the Beam Failure Recovery procedure determines that at least one BFR for only one BFD-RS set has been triggered and not cancelled for an SpCell for which evaluation of the candidate beams; or
1> if the Beam Failure Recovery procedure determines that at least one BFR has been triggered and not cancelled for an SCell for which evaluation of the candidate beams has been completed and if at least one Serving Cell of this MAC entity is configured with two BFD-RS sets:

2> if UL-SCH resources are available for a new transmission and if the UL-SCH resources can accommodate the Enhanced BFR MAC CE plus its subheader as a result of LCP:

3> instruct the Multiplexing and Assembly procedure to generate the Enhanced BFR MAC CE.

2> else if UL-SCH resources are available for a new transmission and if the UL-SCH resources can accommodate the Truncated Enhanced BFR MAC CE plus its subheader as a result of LCP:

3> instruct the Multiplexing and Assembly procedure to generate the Truncated Enhanced BFR MAC CE.

2> else:

3> trigger the SR for beam failure recovery of each BFD-RS set for which BFR has been triggered, not cancelled, and for which evaluation of the candidate beams has been completed;
3> trigger the SR for SCell beam failure recovery for each SCell for which BFR has been triggered, not cancelled, and for which evaluation of the candidate beams has been completed.

All BFRs triggered for an SCell shall be canceled when a MAC PDU is transmitted and this PDU includes a MAC CE for BFR which contains beam failure information of that SCell. All BFRs triggered for a BFD-RS set of a Serving Cell shall be canceled when a MAC PDU is transmitted and this PDU includes an Enhanced BFR MAC CE or Truncated Enhanced BFR MAC CE which contains beam failure recovery information of that BFD-RS set of the Serving Cell.

In the above process, if the NES mode is set or indicated, or if it is the first time period (i.e., the time period in which cell DTX and/or cell DRX are applied), the UE may not perform uplink transmission for beam failure recovery (i.e., PRACH transmission to initiate a random access procedure, BFR MAC CE transmission (if uplink resources are available), or SR transmission for BFR). For example, the UE may not declare beam failure detection if the NES mode is configured or indicated, or if it is the first time period (i.e., the time period in which cell DTX and/or cell DRX are applied).

For this purpose, if a beam failure instance indication is received from the physical layer in the first time period, the MAC layer of the UE may not increment the BFI counter (i.e., BFI_COUNTER). In addition, immediately after switching to non-NES mode or a second time period (i.e., a time period in which cell DTX and/or cell DRX are not applied), if a beam failure instance indication is received from the physical layer, the MAC layer of the UE may resume incrementing the BFI_COUNTER from a previous value (i.e., from the time point at which the BFI_COUNTER stopped incrementing), or may restart incrementing the BFI_COUNTER from an initial value (i.e., 0).

In addition, i) when a beam failure instance indication is received from the physical layer in the first time period, or ii) at the start or end of the first time period, or iii) at the start or end of the second time period, the MAC layer of the UE may set the BFI COUNTER to 0.

In addition, i) when a beam failure instance indication is received from the physical layer in the first time period, or ii) at the start or end of the first time period, or iii) at the start or end of the second time period, the MAC layer of the UE may stop the configured beam failure detection timer (i.e., beamFailureDetectionTimer).

In addition, in the first time period, if a beam failure instance indication is received from the physical layer, the MAC layer of the UE may not start or restart the beamFailureDetectionTimer, and immediately after switching to the non-NES mode or the second time period, if a beam failure instance indication is received from the physical layer, the MAC layer of the UE may start or restart the beamFailureDetectionTimer.

Additionally, the physical layer of the UE may ignore, not receive, or not attempt to detect the beam failure detection RS in the first time period, and the physical layer of the UE may attempt to receive or detect the beam failure detection RS in the second time period.

In addition, the physical layer of the UE may not report a beam failure instance indication to the MAC layer during the first time period, and may report a beam failure instance indication to the MAC layer immediately after switching to non-NES mode or the second time period.

In addition, when configured or indicated to NES mode, or during the first time period, the MAC layer of the UE may stop or temporarily stop the beamFailureDetectionTimer if it is running. Immediately after switching to non-NES mode or the second time period, the MAC layer of the UE may resume the timer from its previous value (i.e., from the time when the beamFailureDetectionTimer stopped running) or restart the timer from its initial value (i.e., 0).

In addition, when configured or indicated to NES mode, or within the first time period, the MAC layer of the UE may ignore a Beam Failure detected in the manner described above and may not declare a beam failure. Alternatively, the MAC layer of the UE may declare a beam failure but may not report the beam failure to the base station or may not trigger a RACH or BFR procedure (i.e., not trigger or transmit a BFR MAC CE). However, in non-NES mode or within the second time period, the MAC layer of the UE may not ignore a beam failure detected in the manner described above and may declare a beam failure. Accordingly, the MAC layer of the UE may report a beam failure to the base station or trigger a RACH or BFR procedure (i.e., trigger or transmit a BFR MAC CE to the base station).

Meanwhile, if the BFR or RACH process in the second cell is triggered due to the BFD of the first cell, i) at the start time or the end time of the first time period in the first cell or the second cell, or ii) at the start time or the end time of the second time period in the first cell or the second cell, the UE cancels all triggered BFR(s) for the first or second cell, or considers the BFR or RACH to be successful, and determines that the BFR or RACH process is successful. Here, the first cell and the second cell may be the same or different.

Embodiment 2: Method for detecting candidate beams for link recovery according to NES

If a BFR procedure (e.g., BFR RACH) is triggered through the above-described process according to Embodiment 1, a UE can measure RS(s) in a candidate beam RS list and transmit a PRACH preamble using a PRACH resource mapped to the best beam RS. Here, a UE can measure L1-RSRP of a DL RS (i.e., candidateBeamRS) configured with set q1 (up to 2 ports P-CSI-RS or SSB) and select a specific beam based on the measured L1-RSRP.

According to an embodiment of the present disclosure, for candidate beam detection for link recovery of a UE, a base station may separately configure one or more candidate beam RSs (i.e., RS list# 1) for two antenna ports (APs) and one or more candidate beam RSs (i.e., RS list#2) for one AP, as shown below. Alternatively, a base station may separately configure one or more candidate beam RSs (i.e., RS list#1) for one AP having 32 antenna elements and one or more candidate beam RSs (i.e., RS list#2) for one AP having 8 antenna elements. Here, the candidate beam RSs may be configured as P-CSI-RS or SSB.

For example, the candidate beam RS list may be configured as shown in Table 6 below.

Table 6 illustrates higher layer parameters for configuring the candidate beam RS list.

【Table 6】

| | | |
|---|---|---|
| - candidate beam RS #1 | | |
| candidateBeamRSList | SEQUENCE (SIZE(1..maxNrofCandidateBeams)) | OF PRACH- |
| ResourceDedicatedBFR | | |
| - candidate beam RS #2 | | |
| candidateBeamRSList | SEQUENCE (SIZE(1..maxNrofCandidateBeams)) | OF PRACH- |
| ResourceDedicatedBFR | | |

According to an embodiment of the present disclosure, a UE configured with multiple candidate beam RS lists may perform BFR as follows.

For example, if a cell in which beam failure is detected is a PCell or a PSCell, a UE may trigger a BFR random access procedure (i.e., a RACH procedure) as described below. Here, a UE may measure L1-RSRP for RSs in the candidate beam RS list and perform a random access procedure using a PRACH resource and a preamble associated with the optimal RS.

On the other hand, for example, if a cell in which beam failure is detected is SCell, a UE can report the beam failure to a base station by transmitting a scheduling request (SR) PUCCH as described below.

As above, when a UE transmits a PRACH or PUCCH for BFR (which may be referred to as a beam failure recovery request (BFRQ)), a base station allocates a PUSCH resource to the UE through MSG2, MSGB, or DCI. Thereafter, the UE reports a BFR MAC CE to the base station using the allocated PUSCH resource, and if a new beam is available, a link can be restored through the new beam. Here, the UE can report an identifier for the new beam(s) and the quality (e.g., RSRP or SINR) for the corresponding beam(s) to the base station through the BFR MAC CE.

Method 1: A method of performing BFR by applying candidate beam RS list#1 or candidate beam RS list#2 according to a base station's indication.

A UE that receives a higher-layer message (e.g., an RRC message) configuring the candidate beam RSs may receive DCI, MAC CE, or RRC message from base station indicating RS list #1 or RS list #2. If beam failure is detected for an activated RS resource set, the UE may perform BFR by applying RS list #1 or RS list #2 according to the indication of the base station.

For example, if a cell where BFD occurs is a PCell or PSCell, a UE may measure L1-RSRP for RSs within a specific candidate beam RS list indicated by a base station, select a specific/optimal RS, and perform a random access procedure by selecting the associated PRACH resource and/or preamble. Alternatively, if a cell where BFD occurred is an SCell, a UE may transmit an SR PUCCH for BFR and report to a base station, through BFR MAC CE, the new RS(s) available within the RSs in the specific candidate beam RS list indicated by the base station in the resources allocated by the base station, and the quality (e.g., RSRP or SINR) for the RS(s).

Method 2: BFR is performed using a candidate beam RS list mapped to a detected RS resource set.

A base station may configure multiple RS resource sets (i.e., BFD RS sets, e.g., Periodic CSI-RS resource sets or SSB index sets) for BFD and map each BFD RS resource set to a single candidate beam RS list. For example, BFD RS resource set #a may be mapped to RS list #1, and BFD RS resource set #b may be mapped to RS list #2. In this case, when a specific BFD RS resource set is activated and a beam failure is detected through it, a UE may perform BFR by applying a specific RS list mapped to the specific BFD RS resource set.

For example, if a cell where BFD occurs is a PCell or a PSCell, a UE may measure L1-RSRP for RSs within a specific candidate beam RS list mapped to the BFD RS set where beam failure is detected, select a specific/optimal RS, and perform a random access procedure by selecting PRACH resources and/or preambles associated therewith. Alternatively, if a cell where BFD occurs is a SCell, a UE may transmit an SR PUCCH for BFR, and report to a base station, through BFR MAC CE, available new RS(es) within the RSs within the specific candidate beam RS list mapped to the BFD RS set where beam failure is detected, and the quality (e.g., RSRP or SINR) for the RS(es).

Method 3: A method of performing BFR through a candidate beam RS list that is mapped according to whether it is NES mode or a specific time period.

A base station may indicate a UE to configure candidate beam RS list#1 as RS of non-NES mode and candidate beam RS list#2 as RS of NES mode through a higher layer message (e.g., RRC message). In this case, if a UE is configured/indicated to operate in NES mode, the UE may perform BFR by applying RS list#2, and if the UE is not configured/indicated to operate in NES mode (i.e., if the UE is configured/indicated to operate in non-NES mode), the UE may perform BFR by applying RS list#1. Here, the UE may operate in NES mode or non-NES mode according to the configuration/indication of the base station or according to a specific rule.

For example, if a cell where BFD occurs is a PCell or a PSCell, a UE may measure L1-RSRP for RSs in the associated specific candidate beam RS list depending on whether the UE operates in NES mode or non-NES mode, select a specific/optimal RS, and perform a random access procedure by selecting PRACH resources and/or preambles associated therewith. Alternatively, if a cell where BFD occurs is a SCell, a UE may transmit an SR PUCCH for BFR and report to the base station, through BFR MAC CE, new RS(es) available in the RSs in the associated specific candidate beam RS list and the quality (e.g., RSRP or SINR) for the RS(es), depending on whether the UE operates in NES mode or non-NES mode.

Alternatively, the base station may indicate the UE via an RRC message to configure RS list#1 as the RS for the second time period and RS list#2 as the RS for the first time period. In this case, the UE may perform BFR by applying RS list#2 in the first time period and may perform BFR by applying RS list#1 in the second time period. The UE may operate in the first time period or the second time period according to the configuration/indication of the base station or according to a specific rule.

Additional method A: In the above methods 1/2/3, if a base station indicates candidate beam RS list#1, a UE can perform BFR only with candidate beam RS list#1, and if the base station indicates candidate beam RS list#2, the UE can perform BFR using both candidate beam RS list#1 and candidate beam RS list#2.

Alternatively, a base station may indicate both candidate beam RS list#1 and candidate beam RS list#2, or only candidate beam RS list#1. In this case, if both candidate beam RS list#1 and candidate beam RS list#2 are indicated, a UE may perform BFR using both candidate beam RS list#1 and candidate beam RS list#2.

In addition, when a base station indicates candidate beam RS list#1, a UE performs BFR using candidate beam RS list#1 with priority, but may also measure candidate beam RS list#2 and perform BFR using both candidate beam RS list#1 and candidate beam RS list#2. In addition, when a base station indicates candidate beam RS list#2, the UE performs BFR using candidate beam RS list#2 with priority, but may also measure candidate beam RS list#1 and perform BFR using both candidate beam RS candidate beam list#1 and RS list#2.

Additional Method B: When a base station configures the beam failure detection and recovery procedure for a UE in the above methods, the base station may transmit beamFailureRecoveryConfig, beamFailureRecoverySpCellConfig, beamFailureRecoverySCellConfig, radioLinkMonitoringConfig, etc., including some or all of the following parameters, to the UE via a higher layer message (e.g., an RRC message). Here, some or all of the following parameters may be configured/operated per RS resource set for BFD, per candidate beam RS list for BFR, per NES mode and non-NES mode or per first and second periods, or each configured/operated per BFR RACH resource/preamble index set.

- Higher layer parameter beamFailureInstanceMaxCount for beam failure instance maximum count for BFD: This parameter determines the number of beam failure events that trigger BFR for the UE.
- Higher layer parameter beamFailureDetectionTimer for beam failure detection timer for BFD: This parameter indicates the timer for BFD.
- Higher layer parameter beamFailureRecoveryTimer for beam failure detection timer: This parameter indicates the timer for BFR, and a UE whose timer expires will not use contention-free random access for BFR.
- Higher layer parameter rsrp-ThresholdSSB for RSRP threshold for SSB: This parameter indicates the L1-RSRP threshold used by the UE to determine whether a candidate beam can be used to attempt contention-free random access to recover from a beam failure.
- Higher layer parameter rsrp-ThresholdBFR for RSRP threshold of BFR: This parameter indicates the L1-RSRP threshold used by the UE to determine whether a candidate beam can be included in the MAC CE for beam failure recovery.
- Higher layer parameter powerRampingStep for power ramping step: This parameter indicates the step for the PRACH.
- High-layer parameter powerRampingStepHighPriority for power ramping step for high priority: This parameter indicates the power ramping step applied to the prioritized random access procedure.
- High-layer parameter preambleReceivedTargetPower for preamble received target power: This parameter indicates the target power level at the network receiver.
- High-layer parameter preambleTransMax for preamble transmit power: This parameter indicates the maximum number of random access (RA) preamble transmissions performed before declaring a failure.
- High-layer parameter scalingFactorBI for backoff indicator (BI) scaling factor: This parameter indicates the scaling factor for the BI for the prioritized random access procedure.
- Higher layer parameter ssb-perRACH-Occasion for SSB per RACH occasion: This parameter indicates the number of SSBs per RACH occasion for contention-free BFR.
- Higher layer parameter ra-ResponseWindow for random access response window: This parameter indicates the length of the Msg2 (i.e., random access response (RAR)) window in the number of slots.
- Higher layer parameter prach-ConfigurationIndex for PRACH configuration index: This parameter indicates the PRACH configuration index.
- Higher layer parameter ra-ssb-OccasionMaskIndex for random access SSB opportunity mask index: This parameter indicates the PRACH mask index explicitly signaled for random access resource selection.

- Higher layer parameter ra-OccasionList for random access opportunity list: This parameter indicates the random access occasion that the UE should use when performing BFR by selecting the candidate beam identified by this CSI-RS.
- Higher layer parameter candidateBeamRSList for candidate beam RS list: This parameter indicates the RSs (CSI-RS and/or Indicates a list of RSs (CSI-RS and/or SSB) that identify candidate beams for recovery.
- Higher layer parameter candidateBeamRS-List-r16 for candidate beam RS list: This parameter indicates a list of RSs (CSI-RS and/or SSB) that identify candidate beams for recovery.
- Higher layer parameter candidateBeamRS-List2-r17 for candidate beam RS list: This parameter indicates a list of RSs (CSI-RS and/or SSB) that identify candidate beams for recovery.
- BFI counter (BFI_COUNTER): This variable is incremented by 1 when a BFI is received from a lower layer.

For PCell or PSCell, upon request to the higher layer, a UE provides the upper layer (i.e., MAC) with the periodic CSI-RS configuration index and/or SS/PBCH block index from set $q_1$ or $q_{1,0}$ or $q_{1,1}$, and the corresponding L1-RSRP measurement that is greater than or equal to the $Q_{in,LR}$ threshold.

For SCell, upon request to a higher layer, a UE with corresponding L1-RSRP measurements greater than or equal to the $Q_{in,LR}$ threshold informs the higher layer whether there is at least one periodic CSI-RS configuration index or SS/PBCH block index from the set $q_1$, $q_{1,0}$, or $q_{1,1}$, and the UE provides the periodic CSI-RS configuration index and/or SS/PBCH block index from the set $q_1$, $q_{1,0}$, or $q_{1,1}$ and corresponding L1-RSRP measurements greater than or equal to the $Q_{in,LR}$ threshold.

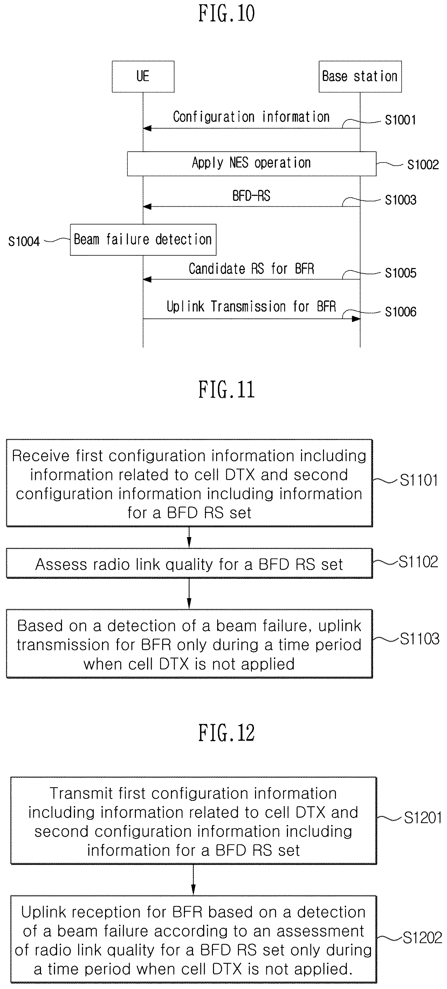

FIG. 10 illustrates a signaling method for a beam failure detection method according to an embodiment of the present disclosure.

Referring to FIG. 10, a UE receives configuration information from a base station (S1001).

According to the present disclosure, the base station can activate or deactivate NES mode operation (i.e., cell DTX and/or cell DRX applied). Here, the base station can activate or deactivate NES mode operation for each cell controlled by the base station, and can notify the UE of such NES mode activation or deactivation information through the configuration information. That is, the configuration information can include information related to the NES mode operation (i.e., cell DTX and/or cell DRX applied) described in the proposed method described above. For example, the configuration information may include information about a time period (or timer) during which NES mode operation (i.e., cell DTX and/or cell DRX operation) is activated (i.e., a time period during which the base station performs TX/RX for a specific cell) and/or information about a time period (or timer) during which NES mode operation (i.e., cell DTX and/or cell DRX operation) is deactivated (i.e., a time period during which the base station does not perform TX/RX for a specific cell).

In addition, for example, the configuration information may include configuration information related to the BFD procedure and/or the BFR procedure described in the proposed method described above. For example, the configuration information may include information on BFD RS set(s) related to the BFD procedure, and in some cases, the BFD RS set(s) may not be explicitly configured/indicated. For example, the configuration information may include information on a plurality of RSs (reference signals) (i.e., RSs for which QCL related to spatial reception parameters is configured or QCL type D RSs) for a spatial relation assumption (e.g., QCL relationship) configured for a specific CORESET (/CORESET group). For example, the configuration information may include configuration information on BFRQ resources related to the BFR procedure.

For example, the configuration information may include information about a first BFD RS set (including one or more RSs) and a second BFD RS set (including one or more RSs) (for a specific cell or cell group). Additionally, the configuration information may include information about one or more sub-configurations (including one or more RSs) within a BFD RS set (for a specific cell or cell group).

Here, a BFD RS set (or one or more sub-configurations) to be used for BFD may be indicated/activated by explicit configuration/indication by the base station. Alternatively, a BFD RS set (or one or more sub-configurations) to be used for BFD may be determined/activated implicitly without explicit configuration by the base station.

For example, a BFD RS set including CSI-RSs indicated by a TCI state for a CORESET (or a CORESET selected from among multiple CORESETs used for monitoring) used by the UE for PDCCH monitoring among the first BFD RS set or the second BFD RS set may be selected (or one or more sub-configurations within the multiple sub-configurations may be selected). As another example, a BFD RS set including a CSI-RS indicated by a TCI state determined according to a random access procedure most recently performed by the UE among the first BFD RS set or the second BFD RS set may be selected (or one or more sub-configurations within a plurality of sub-configurations may be selected). As another example, a BFD RS set including a CSI-RS QCLed with an SSB having a measurement value greater than or equal to a highest or predetermined threshold may be selected (or one or more sub-configurations within a plurality of sub-configurations may be selected).

Additionally, the configuration information may include information on one or more parameters to be used for the UE's BFD procedure. For example, the one or more parameters may include at least one of: i) a threshold for radio link quality used to detect the beam failure; and ii) a threshold for a layer 1 reference signal received power (L1-RSRP) measurement value used to determine available RSs reported to the base station.

Additionally, the configuration information may include information on a first candidate beam RS list (including one or more RSs) and a second candidate beam RS list (including one or more RSs) (for a specific cell or cell group). Here, a single candidate beam RS list to be used for BFR may be determined/activated either explicitly by the base station or implicitly.

Additionally, the configuration information may include information on one or more parameters to be used for the UE's BFR procedure.

A base station and a UE may apply an NES operation (S1001).

That is, the base station and the UE may apply the cell DTX and/or cell DRX operation.

Here, as described above, the base station may explicitly transmit information about the NES mode in the configuration information to the UE to indicate the application of the NES operation (i.e., the cell DTX and/or cell DRX operation).

Alternatively, the base station may indirectly indicate/configure the operation of the NES (i.e., cell DTX and/or cell DRX operation) by transmitting to the UE information about one or more antenna ports that are turned off and/or information about one or more antenna ports that have reduced transmit power.

A UE receives BFD RS(s) (according to the NES operation) from a base station (S1003).

Here, if one BFD RS set is configured by the base station, the UE can receive RS(s) (e.g., CSI-RS, SSB) within the configured BFD RS set.

Additionally, if multiple BFD RS sets are configured by the base station, the UE can receive RS(s) (e.g., CSI-RS, SSB) within the multiple BFD RS sets. If multiple sub-configurations are configured by the base station within one BFD RS set, the UE can receive RS(s) (e.g., CSI-RS, SSB) within the multiple sub-configurations.

Although not illustrated in FIG. 10, the UE may receive activation/selection information for one BFD RS from among multiple BFD RS sets from the base station (e.g., via MAC CE, DCI, etc.). Alternatively, according to the aforementioned embodiment 1, a specific BFD RS set may be implicitly selected from among multiple BFD RS sets.

In addition, although not illustrated in FIG. 10, the UE may receive activation/selection information for one or more sub-configurations from among multiple sub-configurations within a BFD RS set from the base station (e.g., via MAC CE, DCI, etc.).

A UE detects beam failure by assessing radio link quality for a BFD RS set (S1004).

When a BFD RS set is configured by the base station, the UE can detect a beam failure by assessing the radio link quality (e.g., BLER) for all RSs within the configured BFD RS set. Specifically, the physical layer of the UE transmits a beam failure indicator (BFI) to the higher layer (i.e., MAC) if the radio link quality (e.g., BLER) for all RSs within the configured BFD RS set is worse than a threshold. The higher layer (i.e., MAC) of the UE can declare a beam failure if the number of BFI receptions exceeds a certain threshold.

Here, the UE can detect a beam failure using one or more parameter(s) related to BFD (and/or BFR) configured by the base station. Furthermore, a positive or negative offset may be applied to one or more of the parameters based on some of the multiple antenna ports for one or more RS(s) within the BFD RS set being turned off or have reduced transmission power.

Furthermore, when multiple BFD RS sets are configured by the base station, the UE can detect a beam failure by assessing the radio link quality for all RS(s) within the active/selected BFD RS set among the multiple BFD RS sets.

Furthermore, when multiple sub-configurations are configured within a single BFD RS configured by the base station, the UE can detect beam failure by assessing the radio link quality for all RSs within one or more active/selected sub-configurations. In this case, the beam failure can be detected when the BFI counter reaches its maximum value based on the radio link quality assessment for the BFD RS set.

Furthermore, although not illustrated in FIG. 10, the UE may ignore, not receive, or not attempt to detect BFD-RS reception within the non-active period of NES operation (i.e., cell DTX and/or cell DRX operation).

A UE receives candidate RS(s) for BFR (or a candidate beam RS list) from a base station (S1005).

Here, step S 1005 in FIG. 10 is depicted as being performed after steps S 1003 and S 1004 for convenience of explanation, but step S1005 is not necessarily performed after steps S1003 and S1004.

The UE performs measurements (e.g., L1-RSRP, L1-SINR) of candidate RS(s) (or candidate beam RS list) for the received BFR.

Here, when multiple candidate beam RS lists are configured by the base station, the UE can receive and/or measure (e.g., L1-RSRP, L1-SINR) RSs within the activated/selected candidate RS list among the multiple BFD RS sets. Although not illustrated in FIG. 10 , the UE may also receive activation/selection information for a candidate beam RS list from the base station among the multiple candidate RS lists (e.g., via MAC CE, DCI, etc.). Alternatively, according to the aforementioned embodiment 2, a specific candidate RS list may be implicitly selected from among the multiple candidate RS lists.

A UE performs uplink transmission for BFR to a base station (S1006).

That is, the UE can perform the BFR procedure based on the proposed method described above.

Here, the uplink transmission for BFR may be any one of a physical random access channel (PRACH) transmission to initiate a random access procedure, an uplink transmission for a BFR medium access control (MAC) control element (CE) transmission, or a scheduling request (SR) transmission for BFR.

For example, if a beam failure is detected on the PCell or PSCell, the UE may transmit a PRACH using a PRACH resource (and/or a PRACH preamble) associated (directly or indirectly) with the best beam RS (CSI-RS or SSB) within the candidate RS list.

Additionally, for example, if a beam failure is detected on the SCell, the UE may transmit a BFR PUCCH (i.e., an SR transmission for BFR) to the base station on the SpCell. And, the UE can transmit BFR MAC CE on the uplink resource allocated by the base station. In addition, if beam failure is detected in the SCell, the UE can transmit BFR MAC CE on the uplink resource if there is available uplink resource. Here, the BFR MAC CE can include the presence or absence of a new beam for the corresponding SCell(s), the beam RS ID if a new beam exists, and the quality(s) (e.g., RSRP or SINR) of the corresponding beam RS(s).

Meanwhile, the operation of performing uplink transmission for the aforementioned BFR may be performed based on the detection of a beam failure for the BFD RS set only within the active period of the NES operation (i.e., cell DTX and/or cell DRX operation). That is, the operation of performing uplink transmission for the aforementioned BFR may not be performed within the non-active period of the NES operation (i.e., cell DTX and/or cell DRX operation).

For example, the uplink transmission for the BFR may not be performed because the beam failure instance (BFI) counter is not incremented within the non-active period of the NES operation (i.e., cell DTX and/or cell DRX operation). Here, even if a beam failure instance indication is transmitted to the MAC layer of the UE from a lower layer of the UE, the BFI counter may not be incremented.

Additionally, for example, within a non-active period of NES operation (i.e., cell DTX and/or cell DRX operation), uplink transmission for the BFR may not be performed even if the BFI counter reaches the maximum value.

In addition, for example, during the non-active period of an NES operation (i.e., cell DTX and/or cell DRX operation), even if the BFI counter reaches the maximum value, BFR may not be triggered, and thus uplink transmission for the BFR may not be performed.

In addition, for example, during the non-active period of an NES operation (i.e., cell DTX and/or cell DRX operation), a beam failure instance indication may not be transmitted from a lower layer of the UE to the MAC layer of the UE.

In addition, for example, during the non-active period of an NES operation (i.e., cell DTX and/or cell DRX operation), even if a beam failure instance indication is transmitted from a lower layer of the UE to the MAC layer of the UE, the beam failure detection timer may not be started or restarted.

FIG. 11 illustrates an operation of a UE for a beam failure detection method according to an embodiment of the present disclosure.

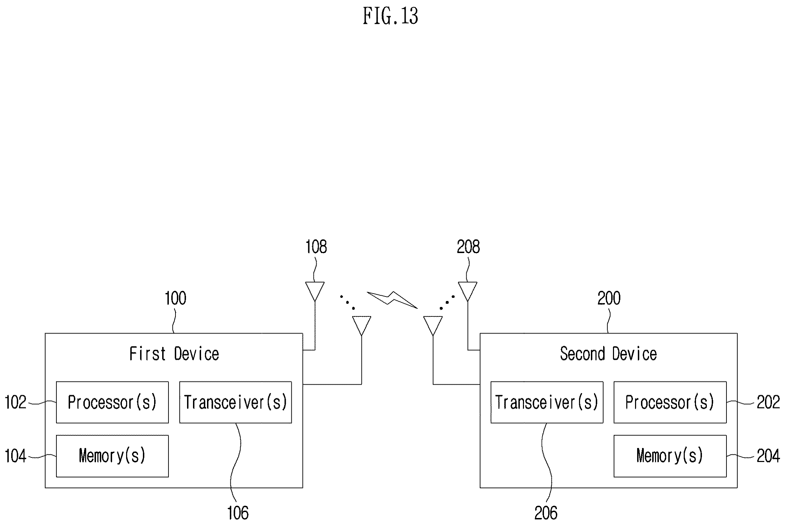

FIG. 11 illustrates the operation of a UE based on the previously proposed methods. The example in FIG. 11 is provided for convenience of explanation and does not limit the scope of the present disclosure. Some of the steps illustrated in FIG. 11 may be omitted depending on circumstances and/or settings. Furthermore, the UE in FIG. 11 is merely an example and may be implemented as the device illustrated in FIG. 13 below. For example, the processor (102/202) in FIG. 13 may control the transceiver (106/206) to transmit and receive channels/signals/data/information, etc., and may also control the memory (104/204) to store the transmitted or received channels/signals/data/information, etc.

In addition, the operation of FIG. 11 may be processed by one or more processors (102, 202) of FIG. 13, and the operation of FIG. 11 may be stored in a memory (e.g., one or more memories (104, 204) of FIG. 13) in the form of a command/program (e.g., an instruction, an executable code) for driving at least one processor (e.g., 102, 202) of FIG. 13.

The UE receives first configuration information including information related to cell DTX (i.e., information related to NES mode) and second configuration information including information about a BFD RS set from the base station (S1101).

Here, according to the present disclosure, the base station can activate or deactivate cell DTX and/or cell DRX (i.e., NES mode operation). Here, the base station can activate or deactivate cell DTX and/or cell DRX (i.e., NES mode operation) for each cell controlled by the base station, and can notify the UE of such cell DTX and/or cell DRX (i.e., NES mode operation) activation or deactivation information through the first configuration information. That is, the first configuration information can include information related to cell DTX and/or cell DRX (i.e., NES mode operation) described in the proposed method described above. For example, the first configuration information may include information about a time period (or timer) during which cell DTX and/or cell DRX (i.e., NES mode operation) is activated (i.e., a time period during which the base station performs TX/RX for a specific cell) and/or information about a time period (or timer) during which cell DTX and/or cell DRX (i.e., NES mode operation) is deactivated (i.e., a time period during which the base station does not perform TX/RX for a specific cell).

Furthermore, according to the present disclosure, the second configuration information may include information about one or more BFD RS sets (including one or more RSs) (for a specific cell or cell group). Furthermore, according to the present disclosure, the second configuration information may include information about multiple sub-configurations (including one or more RSs) within one BFD RS set (for a specific cell or cell group). Furthermore, the second configuration information may include information about one or more parameters to be used for a BFD procedure of the UE. For example, the one or more parameters may include at least one of: i) a threshold for a radio link quality used to detect the beam failure; and ii) a threshold for a layer 1 reference signal received power (L1-RSRP) measurement value for determining an available RS to be reported to the base station. Furthermore, the second configuration information may also include information about a candidate beam RS list (including one or more RSs) (for a specific cell or cell group). Additionally, the second configuration information may include information about one or more parameters to be used for the BFR procedure of the UE.

A UE assesses radio link quality for a BFD RS set (S1102).

Here, when a single BFD RS set (i.e., a first BFD RS set) is configured for the UE, the UE can receive RS(s) (e.g., CSI-RS, SSB) within the configured BFD RS set and assess radio link quality (e.g., BLER).

In addition, according to the above-described embodiment, when multiple BFD RS sets are configured by the base station (or multiple sub-configurations are configured within one BFD RS set), the UE can receive RS(s) (e.g., CSI-RS, SSB) within the multiple BFD RS sets (or RS(s) within the multiple sub-configurations) and assess radio link quality (e.g., BLER).

Here, although not illustrated in FIG. 11, the UE may receive activation/selection information for one BFD RS from among multiple BFD RS sets from the base station (e.g., via MAC CE, DCI, etc.). Alternatively, according to the above-described embodiment, a specific BFD RS set may be implicitly selected from among multiple BFD RS sets. Furthermore, the UE may receive activation/selection information for one or more sub-configurations from among multiple sub-configurations within one BFD RS set from the base station (e.g., via MAC CE, DCI, etc.). Alternatively, one or more sub-configurations may be selected from among multiple sub-configurations within one BFD RS set.

Based on a detection of beam failure only during an active period of a cell DTX, a UE performs uplink transmission for BFR to a base station (S1103).

When a BFD RS set is configured by the base station, the UE can detect a beam failure by assessing the radio link quality (e.g., BLER) for all RS(s) within the configured BFD RS set. Furthermore, when multiple BFD RS sets are configured by the base station, the UE can detect a beam failure by assessing the radio link quality (e.g., BLER) for all RS(s) within the BFD RS set for which activation is indicated (or implicitly selected). Furthermore, when multiple sub-configurations are configured by the base station, the UE can detect a beam failure by assessing the radio link quality (e.g., BLER) for all RS(s) within one or more sub-configurations for which activation is indicated (or implicitly selected).

Specifically, the physical layer of the UE transmits a BFI to the higher layer (i.e., MAC) if the radio link quality (e.g., BLER) is worse than a threshold for all RS(s) within the configured BFD RS set (or all RS(s) within one or more sub-configurations). The higher layer of the UE (i.e., MAC) may declare a beam failure if the number of receptions of BFIs exceeds a specific threshold (i.e., a maximum value).

If a beam failure is detected in the above method, the UE can perform uplink transmission for BFR to the base station. That is, the UE can perform a BFR procedure based on the proposed method described above. In other words, the UE can trigger BFR and perform uplink transmission for BFR.

Here, the uplink transmission for BFR may be any one of a physical random access channel (PRACH) transmission for initiating a random access procedure, an uplink transmission for transmitting a BFR medium access control (MAC) control element (CE), or a scheduling request (SR) transmission for BFR.

For example, if a beam failure is detected on the PCell or PSCell, the UE may transmit a PRACH using the PRACH resource (and/or PRACH preamble) associated (directly or indirectly) with the best beam RS (CSI-RS or SSB) within the candidate RS list.

Furthermore, for example, if a beam failure is detected on the SCell, the UE may transmit a BFR PUCCH (i.e., an SR transmission for BFR) to the base station on the SpCell. Furthermore, the UE may transmit a BFR MAC CE on the uplink resources allocated by the base station. Furthermore, if a beam failure is detected on the SCell, the UE may transmit a BFR MAC CE on the available uplink resources, if any. Here, the BFR MAC CE may include the presence or absence of a new beam for the corresponding SCell(s), the beam RS ID if a new beam exists, and the quality(s) (e.g., RSRP or SINR) of the corresponding beam RS(s).

The operation of performing uplink transmission for the aforementioned BFR may be performed based on the detection of a beam failure for the BFD RS set only within the active period of the cell DTX and/or cell DRX (i.e., NES operation). That is, the operation of performing uplink transmission for the aforementioned BFR may not be performed within the non-active period of the cell DTX and/or cell DRX (i.e., NES operation).

For example, the uplink transmission for the BFR may not be performed within the non-active period of the cell DTX and/or cell DRX (i.e., NES operation) because the beam failure instance (BFI) counter is not incremented. Here, even if a beam failure instance indication is transmitted to the MAC layer of the UE from a lower layer of the UE, the BFI counter may not be incremented.

In addition, for example, within the non-active period of cell DTX and/or cell DRX (i.e., NES operation), uplink transmission for the BFR may not be performed even if the BFI counter reaches the maximum value.

In addition, for example, within the non-active period of cell DTX and/or cell DRX (i.e., NES operation), uplink transmission for the BFR may not be performed because the BFR is not triggered even if the BFI counter reaches the maximum value.

In addition, for example, within the non-active period of cell DTX and/or cell DRX (i.e., NES operation), a beam failure instance indication may not be transmitted from a lower layer of the UE to the MAC layer of the UE.

In addition, for example, within the non-active period of cell DTX and/or cell DRX (i.e., NES operation), the beam failure detection timer may not be started or restarted even if a beam failure instance indication is transmitted to the MAC layer of the UE from a lower layer of the UE.

FIG. 12 illustrates an operation of a base station for a beam failure detection method according to an embodiment of the present disclosure.

FIG. 12 illustrates the operation of a base station based on the previously proposed methods. The example in FIG. 12 is provided for convenience of explanation and does not limit the scope of the present disclosure. Some of the steps illustrated in FIG. 12 may be omitted depending on circumstances and/or settings. Furthermore, the base station in FIG. 12 is merely an example and may be implemented as the device illustrated in FIG. 13 below. For example, the processor (102/202) in FIG. 13 may control the transceiver (106/206) to transmit and receive channels/signals/data/information, etc., and may also control the memory (104/204) to store the transmitted or received channels/signals/data/information, etc.

In addition, the operation of FIG. 12 may be processed by one or more processors (102, 202) of FIG. 13, and the operation of FIG. 12 may be stored in a memory (e.g., one or more memories (104, 204) of FIG. 13) in the form of a command/program (e.g., an instruction, an executable code) for driving at least one processor (e.g., 102, 202) of FIG. 13.

A base station transmits to a UE first configuration information including information related to cell DTX (i.e., information related to NES mode) and second configuration information including information about a BFD RS set (S1201).

Here, according to the present disclosure, the base station can activate or deactivate cell DTX and/or cell DRX (i.e., NES mode operation). Here, the base station can activate or deactivate cell DTX and/or cell DRX (i.e., NES mode operation) for each cell controlled by the base station, and can notify the UE of such cell DTX and/or cell DRX (i.e., NES mode operation) activation or deactivation information through the first configuration information. That is, the first configuration information can include information related to cell DTX and/or cell DRX (i.e., NES mode operation) described in the proposed method described above. For example, the first configuration information may include information about a time period (or timer) during which cell DTX and/or cell DRX (i.e., NES mode operation) is activated (i.e., a time period during which the base station performs TX/RX for a specific cell) and/or information about a time period (or timer) during which cell DTX and/or cell DRX (i.e., NES mode operation) is deactivated (i.e., a time period during which the base station does not perform TX/RX for a specific cell).

Furthermore, according to the present disclosure, the second configuration information may include information about one or more BFD RS sets (including one or more RSs) (for a specific cell or cell group). Furthermore, according to the present disclosure, the second configuration information may include information about multiple sub-configurations (including one or more RSs) within one BFD RS set (for a specific cell or cell group). Furthermore, the second configuration information may include information about one or more parameters to be used for a BFD procedure of the UE. For example, the one or more parameters may include at least one of: i) a threshold for a radio link quality used to detect the beam failure; and ii) a threshold for a layer 1 reference signal received power (L1-RSRP) measurement value for determining an available RS to be reported to the base station. Furthermore, the second configuration information may also include information about a candidate beam RS list (including one or more RSs) (for a specific cell or cell group). Additionally, the second configuration information may include information about one or more parameters to be used for the BFR procedure of the UE.

Based on a detection of beam failure in an assessment of radio link quality for a BFD RS set by a UE only in an active period of a cell DTX, a base station receives an uplink transmission for BFR from the UE (S 1202).

Here, when a single BFD RS set (i.e., the first BFD RS set) is configured for the UE, the UE can receive RS(s) (e.g., CSI-RS, SSB) within the configured BFD RS set and assess radio link quality (e.g., BLER).

In addition, according to the above-described embodiment, when multiple BFD RS sets are configured by the base station (or multiple sub-configurations are configured within one BFD RS set), the UE can receive RS(s) (e.g., CSI-RS, SSB) within the multiple BFD RS sets (or RS(s) within the multiple sub-configurations) and assess radio link quality (e.g., BLER).

Here, although not illustrated in FIG. 12, the UE may receive activation/selection information for one BFD RS from among multiple BFD RS sets from the base station (e.g., via MAC CE, DCI, etc.). Alternatively, according to the above-described embodiment, a specific BFD RS set may be implicitly selected from among multiple BFD RS sets. Furthermore, the UE may receive activation/selection information for one or more sub-configurations from among multiple sub-configurations within one BFD RS set from the base station (e.g., via MAC CE, DCI, etc.). Alternatively, one or more sub-configurations may be selected from among multiple sub-configurations within one BFD RS set.

When a BFD RS set is configured by the base station, the UE can detect a beam failure by assessing the radio link quality (e.g., BLER) for all RS(s) within the configured BFD RS set. Furthermore, when multiple BFD RS sets are configured by the base station, the UE can detect a beam failure by assessing the radio link quality (e.g., BLER) for all RS(s) within the BFD RS set for which activation is indicated (or implicitly selected). Furthermore, when multiple sub-configurations are configured by the base station, the UE can detect a beam failure by assessing the radio link quality (e.g., BLER) for all RS(s) within one or more sub-configurations for which activation is indicated (or implicitly selected).

Specifically, the physical layer of the UE transmits a BFI to the higher layer (i.e., MAC) if the radio link quality (e.g., BLER) is worse than a threshold for all RS(s) within the configured BFD RS set (or all RS(s) within one or more sub-configurations). The higher layer of the UE (i.e., MAC) may declare a beam failure if the number of receptions of BFIs exceeds a specific threshold (i.e., a maximum value).

If a beam failure is detected in the above method, the UE can perform uplink transmission for BFR to the base station. That is, the UE can perform a BFR procedure based on the proposed method described above. In other words, the UE can trigger BFR and perform uplink transmission for BFR.

Here, the uplink transmission for BFR may be any one of a physical random access channel (PRACH) transmission for initiating a random access procedure, an uplink transmission for transmitting a BFR medium access control (MAC) control element (CE), or a scheduling request (SR) transmission for BFR.

For example, if a beam failure is detected on the PCell or PSCell, the UE may transmit a PRACH using the PRACH resource (and/or PRACH preamble) associated (directly or indirectly) with the best beam RS (CSI-RS or SSB) within the candidate RS list.

Furthermore, for example, if a beam failure is detected on the SCell, the UE may transmit a BFR PUCCH (i.e., an SR transmission for BFR) to the base station on the SpCell. Furthermore, the UE may transmit a BFR MAC CE on the uplink resources allocated by the base station. Furthermore, if a beam failure is detected on the SCell, the UE may transmit a BFR MAC CE on the available uplink resources, if any. Here, the BFR MAC CE may include the presence or absence of a new beam for the corresponding SCell(s), the beam RS ID if a new beam exists, and the quality(s) (e.g., RSRP or SINR) of the corresponding beam RS(s).

The operation of performing uplink transmission for the aforementioned BFR may be performed based on the detection of a beam failure for the BFD RS set only within the active period of the cell DTX and/or cell DRX (i.e., NES operation). That is, the operation of performing uplink transmission for the aforementioned BFR may not be performed within the non-active period of the cell DTX and/or cell DRX (i.e., NES operation).

For example, the uplink transmission for the BFR may not be performed within the non-active period of the cell DTX and/or cell DRX (i.e., NES operation) because the beam failure instance (BFI) counter is not incremented. Here, even if a beam failure instance indication is transmitted to the MAC layer of the UE from a lower layer of the UE, the BFI counter may not be incremented.

In addition, for example, within the non-active period of cell DTX and/or cell DRX (i.e., NES operation), uplink transmission for the BFR may not be performed even if the BFI counter reaches the maximum value.

In addition, for example, within the non-active period of cell DTX and/or cell DRX (i.e., NES operation), uplink transmission for the BFR may not be performed because the BFR is not triggered even if the BFI counter reaches the maximum value.

In addition, for example, within the non-active period of cell DTX and/or cell DRX (i.e., NES operation), a beam failure instance indication may not be transmitted from a lower layer of the UE to the MAC layer of the UE.

In addition, for example, within the non-active period of cell DTX and/or cell DRX (i.e., NES operation), the beam failure detection timer may not be started or restarted even if a beam failure instance indication is transmitted to the MAC layer of the UE from a lower layer of the UE.

General Device to which the Present Disclosure may be applied

FIG. 13 is a diagram which illustrates a block diagram of a wireless communication device according to an embodiment of the present disclosure.

In reference to FIG. 13, a first wireless device 100 and a second wireless device 200 may transmit and receive a wireless signal through a variety of radio access technologies (e.g., LTE, NR).

A first wireless device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts disclosed in the present disclosure. For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104. A memory 104 may be connected to a processor 102 and may store a variety of information related to an operation of a processor 102. For example, a memory 104 may store a software code including commands for performing all or part of processes controlled by a processor 102 or for performing description, functions, procedures, proposals, methods and/or operation flow charts disclosed in the present disclosure. Here, a processor 102 and a memory 104 may be part of a communication modem/circuit/chip designed to implement a wireless communication technology (e.g., LTE, NR). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a wireless device may mean a communication modem/circuit/chip.

A second wireless device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts disclosed in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including commands for performing all or part of processes controlled by a processor 202 or for performing description, functions, procedures, proposals, methods and/or operation flow charts disclosed in the present disclosure. Here, a processor 202 and a memory 204 may be part of a communication modem/circuit/chip designed to implement a wireless communication technology (e.g., LTE, NR). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a wireless device may mean a communication modem/circuit/chip.

Hereinafter, a hardware element of a wireless device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC, RLC, PDCP, RRC, SDAP). One or more processors 102, 202 may generate one or more PDUs (Protocol Data Unit) and/or one or more SDUs (Service Data Unit) according to description, functions, procedures, proposals, methods and/or operation flow charts included in the present disclosure. One or more processors 102, 202 may generate a message, control information, data or information according to description, functions, procedures, proposals, methods and/or operation flow charts disclosed in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts disclosed in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts disclosed in the present disclosure may be implemented by using a firmware or a software and a firmware or a software may be implemented to include a module, a procedure, a function, etc. A firmware or a software configured to perform description, functions, procedures, proposals, methods and/or operation flow charts disclosed in the present disclosure may be included in one or more processors 102, 202 or may be stored in one or more memories 104, 204 and driven by one or more processors 102, 202. Description, functions, procedures, proposals, methods and/or operation flow charts disclosed in the present disclosure may be implemented by using a firmware or a software in a form of a code, a command and/or a set of commands.

One or more memories 104, 204 may be connected to one or more processors 102, 202 and may store data, a signal, a message, information, a program, a code, an instruction and/or a command in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. disclosed in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. disclosed in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefor, one or more transceivers 106, 206 may include an (analogue) oscillator and/or a filter.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure.

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

Here, a wireless communication technology implemented in a wireless device 100, 200 of the present disclosure may include Narrowband Internet of Things for a low-power communication as well as LTE, NR and 6G. Here, for example, an NB-IoT technology may be an example of a LPWAN(Low Power Wide Area Network) technology, may be implemented in a standard of LTE Cat NB1 and/or LTE Cat NB2, etc. and is not limited to the above-described name. Additionally or alternatively, a wireless communication technology implemented in a wireless device 100, 200 of the present disclosure may perform a communication based on a LTE-M technology. Here, in an example, a LTE-M technology may be an example of a LPWAN technology and may be referred to a variety of names such as an eMTC (enhanced Machine Type Communication), etc. For example, an LTE-M technology may be implemented in at least any one of various standards including 1) LTE CAT 0, 2) LTE Cat M1, 3) LTE Cat M2, 4) LTE non-BL(non-Bandwidth Limited), 5) LTE-MTC, 6) LTE Machine Type Communication, and/or 7) LTE M and so on and it is not limited to the above-described name. Additionally or alternatively, a wireless communication technology implemented in a wireless device 100, 200 of the present disclosure may include at least any one of a ZigBee, a Bluetooth and a low power wide area network (LPWAN) considering a low-power communication and it is not limited to the above-described name. In an example, a ZigBee technology may generate PAN(personal area networks) related to a small/low-power digital communication based on a variety of standards such as IEEE 802.15.4, etc. and may be referred to as a variety of names.

[Industrial Availability]

A method proposed by the present disclosure is mainly described based on an example applied to 3GPP LTE/LTE-A, 5G system, but may be applied to various wireless communication systems other than the 3GPP LTE/LTE-A, 5G system.

**Claims**

1. A method performed by a user equipment (UE) in a wireless communication system, the method comprising:

   receiving first configuration information and second configuration information from a base station, wherein the first configuration information includes information related to cell discontinuous transmission (DTX), and the second configuration information includes information for a beam failure detection (BFD) reference signal (RS) set;
   assessing radio link quality for the BFD RS set; and
   performing uplink transmission for beam failure recovery (BFR) to the base station only during an active period of the cell DTX, based on a detection of a beam failure for the BFD RS set.

2. The method of claim 1, wherein uplink transmission for the BFR is not performed based on a beam failure instance (BFI) counter being not incremented during a non-active period of the cell DTX.

3. The method of claim 2, wherein even if a beam failure instance indication is transmitted from a lower layer of the UE to a MAC layer of the UE, the BFI counter is not incremented.

4. The method of claim 1, wherein even if the BFI counter reaches a maximum value during a non-active period of the cell DTX, the uplink transmission for the BFR is not performed.

5. The method of claim 1, wherein even if the BFI counter reaches a maximum value during a non-active period of the cell DTX, the uplink transmission for the BFR is not performed according to the BFR not being triggered.

6. The method of claim 1, wherein even if the BFI counter reaches a maximum value during a non-active period of the cell DTX, the uplink transmission for the BFR is not performed according to the BFR not being triggered.

7. The method of claim 1, wherein during a non-active period of the cell DTX, even if a beam failure instance indication is transmitted from a lower layer of the UE to a MAC layer of the UE, a beam failure detection timer is not started or restarted.

8. The method of claim 1, wherein during the active period of the cell DTX, the beam failure is detected when a BFI counter reaches a maximum value based on an assessment of radio link quality for the BFD RS set.

9. The method of claim 1, wherein the uplink transmission for the BFR is one of a physical random access channel (PRACH) transmission for initiating a random access procedure, an uplink transmission for transmitting a BFR medium access control (MAC) control element (CE), or a scheduling request (SR) transmission for the BFR.

10. A user equipment (UE) operating in a wireless communication system, the UE comprising:

    at least one transceiver for transmitting and receiving a wireless signal; and
    at least one processor for controlling the at least one transceiver,
    wherein the at least one processor configured to:

    receive first configuration information and second configuration information from a base station, wherein the first configuration information includes information related to cell discontinuous transmission (DTX), and the second configuration information includes information for a beam failure detection (BFD) reference signal (RS) set;
    assess radio link quality for the BFD RS set; and

perform uplink transmission for beam failure recovery (BFR) to the base station only during an active period of the cell DTX, based on a detection of a beam failure for the BFD RS set.

11. At least one non-transitory computer-readable medium storing at least one instruction, wherein the at least one instruction executable by at least one processor controls a user equipment (UE) to:

receive first configuration information and second configuration information from a base station, wherein the first configuration information includes information related to cell discontinuous transmission (DTX), and the second configuration information includes information for a beam failure detection (BFD) reference signal (RS) set; assess radio link quality for the BFD RS set; and
perform uplink transmission for beam failure recovery (BFR) to the base station only during an active period of the cell DTX, based on a detection of a beam failure for the BFD RS set.

12. A processing apparatus configured to control a user equipment (UE) in a wireless communication system, the processing apparatus comprising:

at least one processor; and
at least one computer memory operably connected to the at least one processor and storing instructions that, based on being executed by the at least one processor, perform operations comprising:

receiving first configuration information and second configuration information from a base station, wherein the first configuration information includes information related to cell discontinuous transmission (DTX), and the second configuration information includes information for a beam failure detection (BFD) reference signal (RS) set;
assessing radio link quality for the BFD RS set; and
performing uplink transmission for beam failure recovery (BFR) to the base station only during an active period of the cell DTX, based on a detection of a beam failure for the BFD RS set.

13. A method performed by a base station in a wireless communication system, the method comprising:

transmitting first configuration information and second configuration information from a base station, wherein the first configuration information includes information related to cell discontinuous transmission (DTX), and the second configuration information includes information for a beam failure detection (BFD) reference signal (RS) set; and
receiving an uplink transmission for beam failure recovery (BFR) from the UE based on detection of a beam failure for the BFD RS set based on an assessment of radio link quality for the BFD RS set by the UE only during an active period of the cell DTX.

14. A base station operating in a wireless communication system, the base station comprising:

at least one transceiver for transmitting and receiving a wireless signal; and
at least one processor for controlling the at least one transceiver,
wherein the at least one processor configured to:

transmit first configuration information and second configuration information from a base station, wherein the first configuration information includes information related to cell discontinuous transmission (DTX), and the second configuration information includes information for a beam failure detection (BFD) reference signal (RS) set; and
receive an uplink transmission for beam failure recovery (BFR) from the UE based on detection of a beam failure for the BFD RS set based on an assessment of radio link quality for the BFD RS set by the UE only during an active period of the cell DTX.

FIG.1

FIG.2

Radio Frame 10ms

Fixed Size

Subframe 1ms

| 0 | 1 | 2 | 3 | 4 | 5 | 6 | 7 | 8 | 9 |

Subframe ={1,2,4} Slots

Slot

| 0 | 1 | 2 | 3 |

Slot={7,14} Symbols

Symbol

| 0 | 1 | 2 | 3 | 4 | 5 | 6 | 7 | 8 | 9 | 10 | 11 | 12 | 13 |

Size depends
on subcarrier
spacing

Mini-Slot
(URLLC)

Mini-Slot={2,4,7} Symbols

FIG.3

One Subframe

$14 \cdot 2^{\mu}$ OFDM Symbol

$k = N_{RB}^{\mu} N_{SC}^{RB} - 1$

Resource Block

Resource Element
– In a resource grid, $(k, \bar{l})$
– In a resource block, $(k, l)$

$N_{RB}^{\mu} N_{SC}^{RB} - 1$ Subcarrier

$N_{SC}^{RB}$ Subcarrier

$k = 0$

$l = 0$     $l = 14 \cdot 2^{\mu} - 1$

FIG.4

FIG.5

FIG.6

FIG.7

FIG.8

FIG.9

┌─────────────────────────────────────────────────────────────────────────────┐
│  ┌─ CSI-RS resource set #1 ─┐   ┌─ Sub-configuration #1 ─┐   ┌─ Sub-configuration #2 ─┐ │
│  │ ┌─ Group or subset #1 ─┐ │   │                        │   │                        │ │
│  │ │ A1-port NZP CSI-RS    │ │   │                        │   │                        │ │
│  │ │  resource #1 with      │ │   │  Group or subset #1    │   │  Group or subset #2    │ │
│  │ │  power P1              │ │   │                        │   │                        │ │
│  │ │ A1-port NZP CSI-RS    │ │   │                        │   │                        │ │
│  │ │  resource #2 with      │ │   └────────────────────────┘   └────────────────────────┘ │
│  │ │  power P1              │ │                                                            │
│  │ └────────────────────────┘ │                                                            │
│  │ ┌─ Group or subset #2 ─┐ │                                                            │
│  │ │ A1-port NZP CSI-RS    │ │                                                            │
│  │ │  resource #3 with      │ │                                                            │
│  │ │  power P2              │ │                                                            │
│  │ │ A1-port NZP CSI-RS    │ │                                                            │
│  │ │  resource #4 with      │ │                                                            │
│  │ │  power P2              │ │                                                            │
│  │ └────────────────────────┘ │                                                            │
│  └──────────────────────────┘                                                            │
└─────────────────────────────────────────────────────────────────────────────┘

## FIG.10

```
┌──────┐                                    ┌──────────────┐
│  UE  │                                    │ Base station │
└──────┘                                    └──────────────┘
   │                                               │
   │       Configuration information               │
   │◄──────────────────────────────────────╴──────┤  ─ S1001
   │                                               │
   │  ┌──────────────────────────────────────┐     │
   │  │         Apply NES operation          │─────┤  ─ S1002
   │  └──────────────────────────────────────┘     │
   │                                               │
   │               BFD-RS                          │
   │◄──────────────────────────────────────╴──────┤  ─ S1003
   │                                               │
S1004 ─┌──────────────────────┐                    │
   │   │ Beam failure detection│                   │
   │   └──────────────────────┘                    │
   │            Candidate RS for BFR               │
   │◄──────────────────────────────────────╴──────┤  ─ S1005
   │                                               │
   │          Uplink Transmission for BFR          │
   ├──────────────────────────────────────╴──────►│  ─ S1006
   │                                               │
```

## FIG.11

```
┌──────────────────────────────────────────────┐
│ Receive first configuration information         │
│ including information related to cell DTX and   │
│ second configuration information including      │─ S1101
│ information for a BFD RS set                    │
└──────────────────────────────────────────────┘
                        │
                        ▼
┌──────────────────────────────────────────────┐
│ Assess radio link quality for a BFD RS set      │─ S1102
└──────────────────────────────────────────────┘
                        │
                        ▼
┌──────────────────────────────────────────────┐
│ Based on a detection of a beam failure, uplink  │
│ transmission for BFR only during a time period  │─ S1103
│ when cell DTX is not applied                    │
└──────────────────────────────────────────────┘
```

## FIG.12

```
┌──────────────────────────────────────────────┐
│ Transmit first configuration information        │
│ including information related to cell DTX and   │─ S1201
│ second configuration information including      │
│ information for a BFD RS set                    │
└──────────────────────────────────────────────┘
                        │
                        ▼
┌──────────────────────────────────────────────┐
│ Uplink reception for BFR based on a detection   │
│ of a beam failure according to an assessment    │─ S1202
│ of radio link quality for a BFD RS set only during│
│ a time period when cell DTX is not applied.     │
└──────────────────────────────────────────────┘
```

EP 4 694 376 A1

FIG.13

# INTERNATIONAL SEARCH REPORT

| International application No. |
|---|
| **PCT/KR2024/004647** |

## A. CLASSIFICATION OF SUBJECT MATTER

**H04W 52/02**(2009.01)i; **H04W 24/08**(2009.01)i; **H04B 7/06**(2006.01)i; **H04W 72/1268**(2023.01)i; **H04W 72/232**(2023.01)i; **H04W 74/0833**(2024.01)i; **H04L 5/00**(2006.01)i; **H04W 72/23**(2023.01)i

According to International Patent Classification (IPC) or to both national classification and IPC

## B. FIELDS SEARCHED

Minimum documentation searched (classification system followed by classification symbols)

H04W 52/02(2009.01); H04B 7/06(2006.01); H04W 74/08(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 셀 불연속 전송(cell DTX), 빔 실패 감지 참조신호(BFD RS), 품질 평가(quality assessment), 활성화 시간 구간(active period), 빔 실패 복구(beam failure recovery)

## C. DOCUMENTS CONSIDERED TO BE RELEVANT

| Category* | Citation of document, with indication, where appropriate, of the relevant passages | Relevant to claim No. |
|---|---|---|
| Y | NEC. Discussion on network energy saving techniques in spatial and power domains. R1-2300768, 3GPP TSG RAN WG1 #112. Athens, Greece. 17 February 2023.<br>See pages 1-2. | 1,9-14 |
| A | | 2-8 |
| Y | WO 2022-075699 A1 (SAMSUNG ELECTRONICS CO., LTD.) 14 April 2022 (2022-04-14)<br>See paragraph [0093]; and claim 1. | 1,9-14 |
| A | QUALCOMM INCORPORATED. Cell DTX/DRX NES Techniques. R2-2300539, 3GPP TSG-RAN WG2 Meeting #121. Athens, Greece. 17 February 2023.<br>See pages 1-2. | 1-14 |
| A | INTERDIGITAL. Cell DTX/DRX mechanism. R2-2300632, 3GPP RAN WG2 Meeting #121. Athens. 17 February 2023.<br>See pages 1-7. | 1-14 |
| A | WO 2021-059245 A1 (LENOVO (SINGAPORE) PTE. LTD.) 01 April 2021 (2021-04-01)<br>See paragraphs [0051]-[0052]; and figure 2. | 1-14 |

☐ Further documents are listed in the continuation of Box C.     ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **22 July 2024** | **23 July 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

International application No.

**PCT/KR2024/004647**

| Patent document cited in search report | | | Publication date (day/month/year) | Patent family member(s) | | | Publication date (day/month/year) |
|---|---|---|---|---|---|---|---|
| WO | 2022-075699 | A1 | 14 April 2022 | CN | 116325871 | A | 23 June 2023 |
| | | | | EP | 4211917 | A1 | 19 July 2023 |
| | | | | KR | 10-2023-0084265 | A | 12 June 2023 |
| | | | | US | 11943037 | B2 | 26 March 2024 |
| | | | | US | 2022-0109489 | A1 | 07 April 2022 |
| WO | 2021-059245 | A1 | 01 April 2021 | BR | 112022004704 | A2 | 14 June 2022 |
| | | | | CN | 114846896 | A | 02 August 2022 |
| | | | | EP | 4035484 | A1 | 03 August 2022 |
| | | | | KR | 10-2022-0068219 | A | 25 May 2022 |
| | | | | US | 11909488 | B2 | 20 February 2024 |
| | | | | US | 2022-0311498 | A1 | 29 September 2022 |

Form PCT/ISA/210 (patent family annex) (July 2022)